# EUROPEAN PATENT APPLICATION

(11) **EP 4 830 514 A1**
(43) Date of publication of application: **28.10.2026**
(21) Application number: 24908427.8
(22) Date of filing: 20.12.2024
(51) Int. Cl.: A01K 1/02, A47D 13/02, B60N 2/28

(54) **PORTABLE CARRIER**

(30) Priority: 21.12.2023 CN 202311775645; 30.09.2024 CN 202411380640; 30.09.2024 CN 202411380704; 13.12.2024 CN 202411844303
(71) Applicant: Jani International Pte. Ltd., Singapore 569874 (SG)
(72) Inventor: CHEN, Yingzhong, Singapore 569874 (SG); GUO, Zhengwen, Singapore 569874 (SG)
(74) Representative: Pfenning, Meinig & Partner mbB
(86) International application number: PCT/SG2024/050818
(87) International publication number: WO 2025/136231

(57) **Abstract**

The present invention relates to a portable carrier. The portable carrier comprises a base, a carrier main body and a reinforcing member. The carrier main body is disposed on the base and has a front side part and a rear side part which are located on two opposite sides in a longitudinal direction. The carrier main body and the base jointly form a bearing space. The reinforcing member is disposed on the front side part and/or the rear side part and is connected to the base.

## Description

### TECHNICAL FIELD

The present disclosure relates to a portable carrier, and in particular, to a portable carrier that can be carried on transportation vehicles.

### BACKGROUND

At present, people often use portable carriers such as pet boxes and pet backpacks to carry pets when traveling with the pets. There is already a portable carrier that can be secured to a seat of a transportation vehicle. However, in a case that a portable carrier having a large size is used to improve comfort of a pet, when the transportation vehicle encounters an emergency stop or collision accident, even if the portable carrier has been secured to the seat of the transportation vehicle, the pet in the portable carrier may be violently shaken due to a large internal space of the portable carrier, and the portable carrier may be significantly deformed due to insufficient strength of a support structure, leaving the pet vulnerable to injury.

### SUMMARY

An objective of the present disclosure is to provide a portable carrier with high impact strength, which can reduce impact force on the pet in the portable carrier when a transportation vehicle carrying the portable carrier encounters an emergency stop or collision accident, so as to prevent injury to the pet, thereby improving safety of the pet.

A first aspect of the present disclosure provides a portable carrier, including: a base; a carrier body arranged above the base and supported by the base, the carrier body having a front side portion and a rear side portion on opposite sides in a longitudinal direction, and the carrier body and the base jointly forming an accommodating space; and a reinforcing member, the reinforcing member being arranged on at least the front side portion of the carrier body, and connected to the base.

In the first aspect of the present disclosure, the reinforcing member includes: a reinforcing portion abutting against the front side portion of the carrier body; and a connection portion connected to an end portion of the reinforcing portion and extending in a direction perpendicular to the reinforcing portion. The connection portion is connected to the base.

In the first aspect of the present disclosure, the front side portion of the carrier body has a multi-layer fabric structure, and the reinforcing portion is located in the front side portion.

In the first aspect of the present disclosure, the reinforcing portion is located in the carrier body and abuts against an inner side face of the front side portion, or the reinforcing portion extends out of the carrier body and abuts against an outer side face of the front side portion.

In the first aspect of the present disclosure, the carrier body is made of a soft material, and a part of the front side portion that is not abutted against by the reinforcing member forms a clearance region. The clearance region is provided with a breathable mesh.

In the first aspect of the present disclosure, the reinforcing member is made of a hard material.

In the first aspect of the present disclosure, the reinforcing portion is in an inverted U shape, and two connection portions are provided. The two connection portions are respectively connected to two ends of the reinforcing portion.

In the first aspect of the present disclosure, the front side portion of the carrier body is provided with a clearance region, and the clearance region is provided with a breathable mesh. An opening of the reinforcing portion in the inverted U shape faces the base, the clearance region corresponds to a space jointly defined by the reinforcing portion in the inverted U shape and the base, and the breathable mesh at least partially covers the clearance region.

In the first aspect of the present disclosure, the base is provided with a receiving space, and the connection portion extends into the receiving space and is limited in the receiving space through a limiting structure.

In the first aspect of the present disclosure, the limiting structure includes a first limiting portion arranged on the connection portion and a second limiting portion arranged on the base. The first limiting portion and the second limiting portion cooperate with each other to achieve limiting.

In the first aspect of the present disclosure, one of the first limiting portion and the second limiting portion is a limiting pin, and the other of the first limiting portion and the second limiting portion is a limiting hole. The limiting pin passes through the limiting hole.

In the first aspect of the present disclosure, the carrier body has a left side portion and a right side portion. The portable carrier further includes a cushioning body detachably arranged on at least one of the left side portion and the right side portion through a connection mechanism.

In the first aspect of the present disclosure, the connection mechanism includes: a plurality of first mating parts arranged on the cushioning body; and a plurality of second mating parts arranged on the at least one of the left side portion and the right side portion. The plurality of first mating parts are mated with the plurality of second mating parts to mount the cushioning body on the at least one of the left side portion and the right side portion.

In the first aspect of the present disclosure, one of the first mating part and the second mating part is a hook, and the other of the first mating part and the second mating part is a hook clasp. The hook is adapted to be hooked to the hook clasp.

In the first aspect of the present disclosure, the cushioning body includes: a first cushioning layer; and a second cushioning layer stacked with the first cushioning layer. The first cushioning layer is more elastic than the second cushioning layer, and the first cushioning layer is farther from the carrier body than the second cushioning layer.

In the first aspect of the present disclosure, the second cushioning layer has a plate-like structure, and the second cushioning layer is made of at least one material selected from expanded polypropylene (EPP), expanded polystyrene (EPS), and resist protection oxide (RPO). The first cushioning layer is made of foam.

In the first aspect of the present disclosure, the cushioning body further includes a protective sheath. The protective sheath covers the first cushioning layer and the second cushioning layer.

In the first aspect of the present disclosure, the portable carrier is provided with an anchoring assembly. The anchoring assembly is adapted to be connected to a seat of a transportation vehicle to secure the portable carrier to the seat of the transportation vehicle.

In the first aspect of the present disclosure, the anchoring assembly includes at least one ISOFIX connector. The at least one ISOFIX connector is configured to be connected to at least one connection point of the seat of the transportation vehicle, and the at least one ISOFIX connector is movably connected to the base to be switchable between an unfolded position and a folded position. The base is provided with at least one folding space, and when the at least one ISOFIX connector is at the folded position, the at least one ISOFIX connector is received in the at least one folding space.

In the first aspect of the present disclosure, the at least one ISOFIX connector is pivotally connected to a rear portion of the base, and the at least one folding space is arranged on the rear portion of the base. The reinforcing member is connected to a front portion of the base, and a portion of the base away from the reinforcing member is the rear portion of the base.

In the first aspect of the present disclosure, the anchoring assembly includes at least one Latch connector and at least one webbing. The at least one Latch connector is connected to the at least one of the base and the carrier body through the at least one webbing, and the at least one Latch connector is configured to be connected to the at least one connection point of the seat of the transportation vehicle.

A second aspect of the present disclosure provides a portable carrier, including: a base; a carrier body arranged above the base and supported by the base, the carrier body having a front side portion and a rear side portion on opposite sides in a longitudinal direction, and the carrier body and the base jointly forming an accommodating space; and a reinforcing member connected to the base. The reinforcing member includes a first reinforcing member and a second reinforcing member connected to each other. A portion of the first reinforcing member is arranged on the front side portion, and another portion of the first reinforcing member is connected to the base. A portion of the second reinforcing member is arranged on the rear side portion, and another portion of the second reinforcing member is connected to the base.

In the second aspect of the present disclosure, the reinforcing member is made of a high-strength material.

In the second aspect of the present disclosure, the first reinforcing member includes a first reinforcing portion and a first connection portion extending from the first reinforcing portion. The second reinforcing member includes a second reinforcing portion and a second connection portion extending from the second reinforcing portion. The first reinforcing portion and the second reinforcing portion are arranged on the front side portion and the rear side portion respectively. The first connection portion and the second connection portion are connected to the base.

In the second aspect of the present disclosure, the front side portion and the rear side portion both have a multi-layer fabric structure, and the first reinforcing portion and the second reinforcing portion are located in the front side portion and the rear side portion respectively.

In the second aspect of the present disclosure, the first reinforcing portion is arranged outside the front side portion in close contact with an inner side face of the front side portion, and the second reinforcing portion is arranged outside the rear side portion in close contact with an inner side face of the rear side portion.

In the second aspect of the present disclosure, the first reinforcing portion is arranged outside the front side portion in close contact with an outer side face of the front side portion, and the second reinforcing portion is arranged outside the rear side portion in close contact with an outer side face of the rear side portion.

In the second aspect of the present disclosure, the first reinforcing member and the second reinforcing member are arranged separately, and the first connection portion and the second connection portion are connected together.

In the second aspect of the present disclosure, one of a tail end of the first connection portion and a tail end of the second connection portion is sleeved on the other of the tail end of the first connection portion and the tail end of the second connection portion, and parts of the tail end of the first connection portion and the tail end of the second connection portion sleeved with each other are fastened by a fastener.

In the second aspect of the present disclosure, the tail end of the first connection portion and the tail end of the second reinforcing portion are connected together by welding or bonding.

In the second aspect of the present disclosure, the first reinforcing member and the second reinforcing member are integrally formed.

In the second aspect of the present disclosure, the base includes a first cover and a second cover, the reinforcing member is fastened to the first cover through a fastening structure, and/or the reinforcing member is fastened between the first cover and the second cover through a fastening structure.

In the second aspect of the present disclosure, the first reinforcing portion and the second reinforcing portion both have an inverted U-shaped structure, including two parallel parts arranged oppositely and a connecting part configured to connect an end of each of the two parallel parts. The carrier body further has a top portion and a left side portion and a right side portion on opposite sides in a transverse direction. The two parallel parts of the inverted U-shaped structure of each of the first reinforcing portion and the second reinforcing portion are close to the left side portion and the right side portion respectively, and the connecting part is close to the top portion.

In the second aspect of the present disclosure, the first reinforcing portion or the second reinforcing portion has an inverted V-shaped, M-shaped, or rectangular structure.

In the second aspect of the present disclosure, the portable carrier further includes a first support bar. The first support bar is connected to the base, and the first support bar is arranged adjacent to the front side portion or arranged in the front side portion.

In the second aspect of the present disclosure, the first support bar has an inverted U-shaped structure, with two ends respectively connected to two ends of a front edge of the base.

In the second aspect of the present disclosure, the carrier body further has a top portion and a left side portion and a right side portion on opposite sides in a transverse direction. The first support bar is embedded into respective edges of the top portion, the left side portion, and the right side portion that are adjacent to the front side portion.

In the second aspect of the present disclosure, the carrier body further has a top portion and a left side portion and a right side portion on opposite sides in a transverse direction. The first support bar is embedded into edges of the front side portion adjacent to the top portion, the left side portion, and the right side portion.

In the second aspect of the present disclosure, the first support bar is made of a high-resilience material.

In the second aspect of the present disclosure, the portable carrier further includes another first support bar connected to the base and arranged adjacent to the rear side portion or in the rear side portion.

In the second aspect of the present disclosure, the portable carrier further includes an anchoring assembly. The anchoring assembly is adapted to be connected to a seat of a transportation vehicle to secure the portable carrier to the seat. A connecting assembly of the anchoring assembly includes an ISOFIX connector or a LATCH connector.

A third aspect of the present disclosure provides a portable carrier, including: a carrier body; a shoulder belt assembly arranged on the carrier body; a base arranged at a bottom portion of the carrier body and forming an accommodating space jointly with the carrier body; an anchoring assembly arranged on the base and having a folded position for shoulder carrying and an unfolded position for fixed placement; and a reinforcing member arranged on the carrier body and connected to the base.

In the third aspect of the present disclosure, the reinforcing member includes: a first reinforcing member arranged on a same side of the carrier body as the shoulder belt assembly to provide support during shoulder carrying. The first reinforcing member is connected to the base.

In the third aspect of the present disclosure, the first reinforcing member includes a support plate. The support plate is arranged on the base to provide support on a side of the carrier body on which the shoulder belt assembly is located.

In the third aspect of the present disclosure, the reinforcing member includes: a second reinforcing member arranged on a side of the carrier body opposite to the shoulder belt assembly. The second reinforcing member is connected to the base.

In the third aspect of the present disclosure, the second reinforcing member includes: a reinforcing portion arranged on a side of the carrier body opposite to the shoulder belt assembly; and a connection portion connected to an end portion of the reinforcing portion and extending in a direction perpendicular to the reinforcing portion. The connection portion is connected to the base.

In the third aspect of the present disclosure, the reinforcing portion is in an inverted U shape, and two connection portions are provided. The two connection portions are respectively connected to two ends of the reinforcing portion.

In the third aspect of the present disclosure, the anchoring assembly includes a connecting assembly having the unfolded position and the folded position, and the shoulder belt assembly and the connecting assembly are arranged on a same side of the carrier body.

In the third aspect of the present disclosure, the anchoring assembly includes: a connecting assembly movably connected to the base and having different lock positions; and a locking mechanism connected to the connecting assembly and adapted to cooperate with the different lock positions to lock the connecting assembly to one of the folded position and the unfolded position.

In the third aspect of the present disclosure, the different lock positions include a first lock position and a second lock position, and the locking mechanism includes: a locking member movably arranged on the base, the locking member being adapted to cooperate with the first lock position or the second lock position; and an operating member arranged on the base and connected to the locking member, the operating member being capable of driving the locking member to move. When the connecting assembly is locked at the folded position, the operating member is operable to cause the locking member to move, thereby releasing the cooperation with the first lock position and causing the locking member to cooperate with the second lock position of the connecting assembly to lock the connecting assembly to the unfolded position.

In the third aspect of the present disclosure, the base is provided with a folding space, and when the connecting assembly is at the folded position, the connecting assembly is received in the folding space.

In the third aspect of the present disclosure, the carrier body is provided with at least one window, and the window is provided with a breathable window body.

In the third aspect of the present disclosure, the breathable window body is fixedly arranged on the window, or the breathable window body is movably arranged on the window to open or close the window.

In the third aspect of the present disclosure, a cushioning body for impact protection is arranged at the at least one window.

In the third aspect of the present disclosure, the cushioning body is integrally formed with or detachably connected to the breathable window body.

In the third aspect of the present disclosure, the carrier body is made of a soft material or is made of a flexible or semi-rigid sheet bonded to a soft material.

### BRIEF DESCRIPTION OF THE DRAWINGS

In order to more clearly illustrate the technical solutions in embodiments of the present disclosure, the accompanying drawings used in the description of the embodiments will be briefly introduced below. It is clear that the accompanying drawings in the following description are only some embodiments of the present disclosure, and other drawings can be obtained by those of ordinary skill in the art from the provided drawings without creative efforts.

In addition, the accompanying drawings are not drawn to 1:1 scale, and relative sizes of various elements in the accompanying drawings are drawn by way of examples only to facilitate understanding of the present disclosure, and not necessarily to true scale. In the drawings:
FIG. 1 illustrates a portable carrier according to an embodiment in the first aspect of the present disclosure;
FIG. 2 is a schematic diagram of the portable carrier in FIG. 1 after a cushioning body is mounted;
FIG. 3 illustrates a base of the portable carrier provided with a reinforcing member in FIG. 1;
FIG. 4 is a schematic diagram of the base provided with the reinforcing member in FIG. 3 from another perspective;
FIG. 5 is a schematic exploded view of the base and the reinforcing member in FIG. 3;
FIG. 6 is an enlarged view of a region A in FIG. 5;
FIG. 7 is a rear view of the base in FIG. 3;
FIG. 8 is a schematic diagram of the reinforcing member in FIG. 3;
FIG. 9 is a rear view of a cushioning body in FIG. 2;
FIG. 10 is a cross-sectional view of the cushioning body in FIG. 9 taken along a direction U1-U1;
FIG. 11 illustrates a portable carrier according to another embodiment in the first aspect of the present disclosure;
FIG. 12 illustrates a portable carrier according to an embodiment in the second aspect of the present disclosure;
FIG. 13 is a top view of the portable carrier in FIG. 12;
FIG. 14 is a front view of the portable carrier in FIG. 12;
FIG. 15 is a right side view of the portable carrier in FIG. 12;
FIG. 16 illustrates a base of the portable carrier provided with a reinforcing member in FIG. 12;
FIG. 17 illustrates the reinforcing member mounted on a first cover of the base in FIG. 16;
FIG. 18 is a schematic exploded view of the reinforcing member and the base in FIG. 17;
FIG. 19 is a schematic diagram of a portable carrier after removal of a carrier body according to another embodiment in the second aspect of the present disclosure;
FIG. 20A illustrates a portable carrier according to yet another embodiment in the second aspect of the present disclosure, and FIG. 20B is a schematic diagram of a portable carrier after removal of a carrier body according to the embodiment;
FIG. 21 illustrates a base of the portable carrier provided with a reinforcing member in FIG. 12, with an anchoring assembly being in an unfolded state;
FIG. 22 is a top view of the base in FIG. 12, with a first cover being hidden and the anchoring assembly being in a folded state;
FIG. 23 is a bottom view of the base in FIG. 12, with a second cover being hidden and the anchoring assembly being in a folded state;
FIG. 24 illustrates a portable carrier according to still another embodiment in the second aspect of the present disclosure;
FIG. 25 illustrates a portable carrier according to an embodiment in the third aspect of the present disclosure, with an anchoring assembly being at a folded position;
FIG. 26 is a schematic diagram of the portable carrier shown in FIG. 25 when the anchoring assembly is at an unfolded position;
FIG. 27 is a schematic diagram of the portable carrier in FIG. 26 from another perspective;
FIG. 28 is a schematic diagram of the portable carrier in FIG. 25 from another perspective;
FIG. 29 is a schematic diagram of the portable carrier in FIG. 26 from yet another perspective;
FIG. 30 is a schematic diagram of the portable carrier in FIG. 25, with a cushioning body being arranged at a window;
FIG. 31 is a schematic diagram of the portable carrier in FIG. 25 from another perspective, with a first cover and a second cover being separated from each other;
FIG. 32 is a schematic diagram of the portable carrier in FIG. 25 from another perspective, with the first cover, a bottom portion, and the second cover being separated from each other;
FIG. 33 illustrates a base of the portable carrier provided with a reinforcing member in FIG. 25;
FIG. 34 is a schematic exploded view of the base in FIG. 33;
FIG. 35 is a schematic exploded view of the base in FIG. 33 from another perspective;
FIG. 36 is a top view of the base provided with an anchoring assembly in FIG. 25 after removal of the first cover; and
FIG. 37 is a bottom view of the base provided with an anchoring assembly in FIG. 25 after removal of the second cover.

### Reference signs:

1000: portable carrier;
1100: carrier body; 1120: left side portion; 1130: right side portion; 1140: front side portion; 1141: clearance region; 1150: second fitting portion; 1151: hook clasp; 1160: rear side portion; 1170: top portion; 1180: handle; 1190: snap ring;
1200: base; 1210: first cover; 1220: second cover; 1221: fixing hole; 1230: receiving space; 1240: second limiting portion; 1241: limiting pin; 1250: fastener; 1260: folding space;
1300: reinforcing member; 1310: connecting portion; 1320: reinforcing portion; 1330: first limiting portion; 1331: limiting hole;
1400: anchoring assembly; 1410: connecting assembly; 1421: webbing; 1422: Latch connector;
1510: cushioning body; 1511: first cushioning layer; 1512: second cushioning layer; 1513: protective sheath; 1520: first fitting portion; 1521: hook; 1514: front surface; 1515: back surface;
2000: portable carrier;
2100: carrier body; 2110: top portion; 2111: top cover; 2120: front side portion; 2121: front cover; 2130: rear side portion; 2140: left side portion; 2141: left side cover; 2150: right side portion;
2200: base; 2210: first cover body; 2211: support surface; 2220: second cover body; 2230: stud;
2300: handle;
2400: operating member;
2500: anchoring assembly; 2510: connecting assembly; 2520: locking member; 2530: first traction member; 2540: second traction member; 2550: linkage member;
2600: reinforcing member; 2610: first reinforcing member; 2611: first reinforcing portion; 2611a: first parallel part; 2611b: first connecting part; 2612: first connecting portion; 2620: second reinforcing member; 2621: second reinforcing portion; 2621a: second parallel part; 2622b: second connecting part; 2622: second connecting portion; 2630: assembly hole; 2640: fastener; 2650: fixing hole;
2710: first support bar; 2720: second support bar;
2800: breathable mesh;
3000: portable carrier;
3100: carrier body; 3120: left side portion; 3121: left side window body; 3130: right side portion; 3131: right side window body; 3140: front side portion; 3141: front side window body; 3150: bottom portion; 3160: rear side portion; 3170: top portion; 3171: top window body; 3180: handle; 3190: shoulder belt assembly; 3191: first shoulder belt; 3192: second shoulder belt;
3200: base; 3210: first cover body; 3220: second cover body; 3221: operating port; 3222: operating recess; 3230: receiving space; 3260: folding space;
3300: reinforcing member; 3310: first reinforcing member; 3311: support plate; 3320: second reinforcing member; 3321: connecting portion; 3322: reinforcing portion;
3400: anchoring assembly; 3410: connecting assembly; 3411: housing; 34111: locking recess; 3414: unlocking component; 430: locking mechanism; 3431: locking member; 34311: locking protrusion; 34312: limiting member; 3432: operating member; 34322: operating portion; 34323: operating connecting portion; 3434: linkage member; 34341: traction arm; 34342: connecting arm; 34343: pivot portion; 34351: first traction member; 3437: reset member; 34381: second traction member;
3500: cushioning body;
X: rotation axis.

### DETAILED DESCRIPTION

In the following description, various aspects of the present disclosure will be described. For the purpose of explanation, specific details are set forth in order to provide a thorough understanding of the present disclosure. It will be apparent to those skilled in the art that other embodiments of the present disclosure differ in details without affecting the essence thereof. Therefore, the present disclosure is not limited to the content shown in the drawings and described in the specification, but only as set forth in the appended claims, the proper scope of the present disclosure is determined only by the broadest interpretation of the claims.

When a feature or element is referred to herein as being "on another feature or element", it may be directly on the another feature or element, or an intermediate feature and/or element may also exist. In contrast, when a feature or element is referred to as being "directly" on another feature or element, there are no intermediate features or elements. It will also be understood that when a feature or element is referred to as being "connected," "attached," or "engaged" to another feature or element, it may be directly connected, attached, or engaged to the another feature or element, or an intermediate feature or element may exist. In contrast, when a feature or element is referred to as being "directly connected," "directly attached," or "directly engaged" to another feature or element, there are no intermediate features or elements.

Space-related terms such as "under", "below", "over", and "above" are used herein for convenience of description, and are particularly used to describe a positional relationship between one feature or element and another feature or element as illustrated in the figures. It should be understood that, in addition to the orientations illustrated in the figures, the space-related terms are intended to further include different orientations of the apparatus in use or operation. For example, if the apparatus in the figures is flipped, the element or feature described as "below" another element or feature may be oriented as "above" the another element or feature. Thus, the exemplary terms "below" may include two orientations of above and below. The apparatus may also include additional orientations (e.g., 90-degree rotation or other directions), and thus space-related description used herein may be interpreted accordingly. Similarly, unless otherwise specified, the terms such as "upward", "downward", "vertical", and "horizontal" used herein are for illustration only.

Although the terms "first" and "second" may be used herein to describe various features or elements, these features or elements should not be limited by these terms unless specifically stated otherwise. These terms may be used to distinguish one feature or element from another feature or element. Therefore, a first feature or element discussed below may be referred to as a second feature or element, and similarly, a second feature or element discussed below may be referred to as a first feature or element. Herein, "a plurality of" means at least two, such as two or three, unless otherwise expressly and specifically defined.

Herein, "front side" means a side of the portable carrier facing away from a backrest when it is secured to a seat of the transportation vehicle, "rear side" means a side of the portable carrier facing the backrest when it is secured to the seat of the transportation vehicle, "left side" refers to a side on the left when looking from the rear side of the portable carrier to the front side, and "right side" means a side on the right when looking from the back side of the portable carrier to the front side. Other orientation terms involving "front", "back", "left", and "right" mentioned herein also have similar meanings. A "longitudinal direction" of the portable carrier corresponds to a "front-rear direction", and a "horizontal direction" of the portable carrier corresponds to a "left-right direction".

It is to be noted that unless otherwise expressly stated and limited, the orientation terms such as "front", "rear", "left", and "right" related to the portable carrier herein are based on the orientations shown in the accompanying drawings. In the drawings, arrows L and R schematically show "left" and "right" directions, and arrows F and B schematically show "front" and "rear" directions. These orientation terms are only used to explain the relative positional relationship of the components to make the description of the embodiments of the present disclosure clearer, and are not used to unduly limit the protection scope of the present disclosure.

A first aspect of the present disclosure provides an improved portable carrier. The portable carrier provided in this aspect will be described below by taking a pet carrier as an example. The portable carrier includes, but is not limited to, a carrycot, a pet carrier, a pet carriage, a pet backpack, and other carriers suitable for carrying animals. Such a portable carrier is also known as an animal carrier.

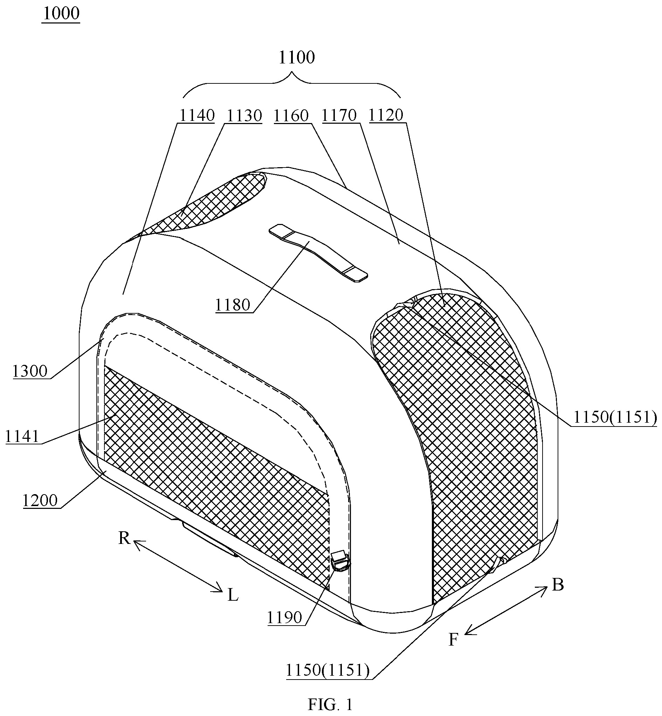

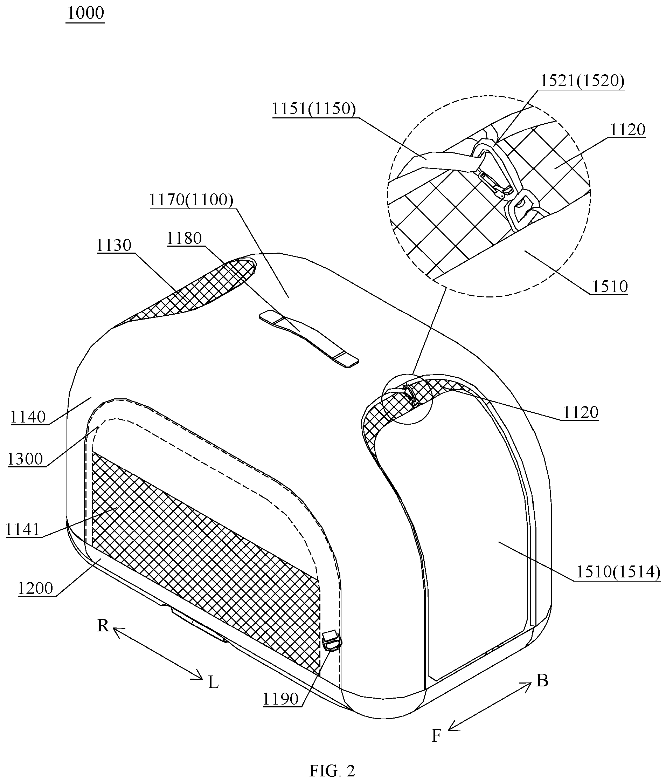

FIG. 1 and FIG. 2 illustrate a portable carrier 1000 according to an embodiment in the first aspect of the present disclosure. The portable carrier 1000 in FIG. 1 is not provided with a cushioning body 1510, and the portable carrier 1000 in FIG. 2 is provided with the cushioning body 1510.

The portable carrier 1000 has an accommodating space for accommodating an animal. The portable carrier 1000 may be carried around (such as taken or carried on a back), and may be secured to a seat of a transportation vehicle such as a train or a car. The portable carrier 1000 includes a carrier body 1100 and a base 1200. The carrier body 1100 is arranged above the base 1200. The carrier body 1100 and the base 1200 jointly form the accommodating space. The base 1200 is made of, for example, a hard material to form a support for the carrier body 1100. The carrier body 1100 may include fabric sheets and other materials defining the accommodating space. The portable carrier 1000 is further provided with a reinforcing member 1300. The reinforcing member 1300 is connected to the base 1200 and extends to a side portion of the carrier body 1100 to support the carrier body 1100, thereby limiting deformation of the carrier body 1100 under impact. The reinforcing member 1300 can function as an impact protection function, and therefore, the "reinforcing member" in the embodiments of the first aspect may also be referred to as an "impact protection component".

As shown in FIG. 1 and FIG. 2, the carrier body 1100 has a front side portion 1140, a left side portion 1120, a right side portion 1130, and a rear side portion 1160. The front side portion 1140 forms a front side wall of the accommodating space, the left side portion 1120 forms a left side wall of the accommodating space, the right side portion 1130 forms a right side wall of the accommodating space, and the rear side portion 1160 forms a rear side wall of the accommodating space. In some embodiments, a bottom wall of the accommodating space is formed by the base 1200, and the front side portion 1140, the left side portion 1120, the right side portion 1130, and the rear side portion 1160 are directly connected to the base 1200. In some alternate embodiments, the carrier body 1100 has a bottom portion. The bottom portion is fastened to the base 1200 and forms a bottom wall of the accommodating space. The reinforcing member 1300 is connected to the base 1200 and extends through the bottom portion of the carrier body 1100.

As shown in FIG. 1 to FIG. 2, the portable carrier 1000 is provided with a handle 1180. The portable carrier 1000 is provided with a top portion 1170. The top portion 1170 forms a top wall of the accommodating space. The handle 1180 is arranged at the top portion 1170 of the carrier body 1100. The portable carrier 1000 can be conveniently taken through the handle 1180. In order to facilitate carrying of the portable carrier 1000, the portable carrier 1000 is further provided with two (but not limited to two) snap rings 1190, and the two snap rings 1190 are used to be detachably connected to a crossbody strap. The two snap rings 1190 are respectively arranged on opposite sides of the carrier body 1100, such as the front side portion 1140 and the rear side portion 1160. The two snap rings 1190 are distributed along a diagonal line of the carrier body 1100.

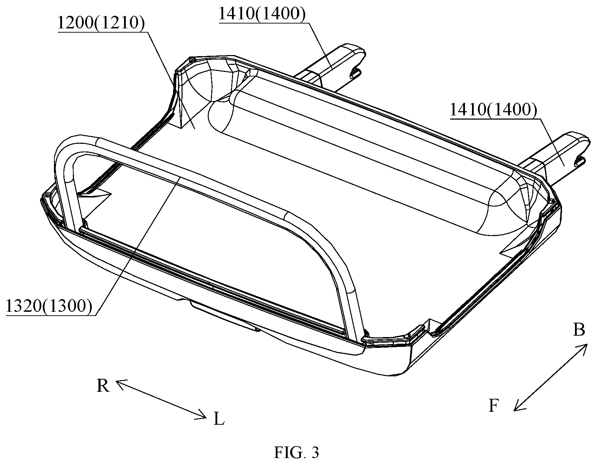

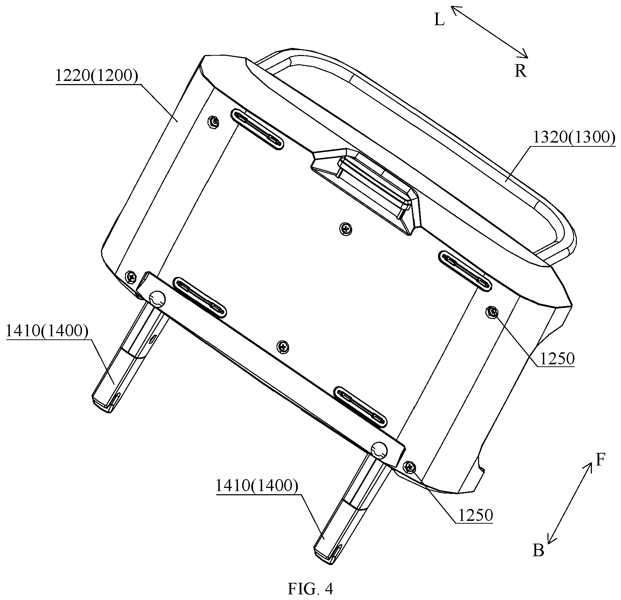

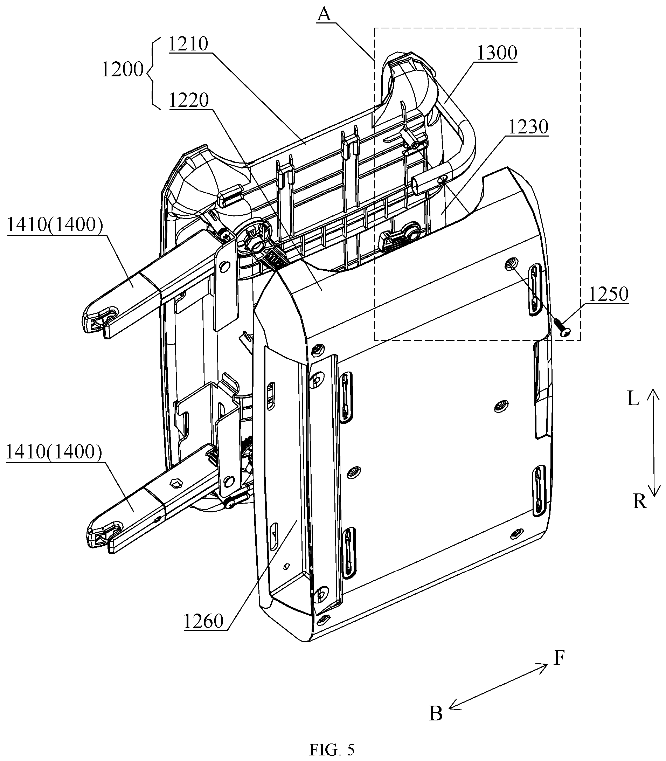

As shown in FIG. 3 to FIG. 5, the base 1200 includes a first cover 1210 and a second cover 1220, and the first cover 1210 and the second cover 1220 are detachably connected to each other through a fastener 1250. The fastener 1250 may be, for example, a screw, a bolt, or the like. Alternatively, the first cover 1210 and the second cover 1220 may be detachably connected by, for example, a snap connection. Referring to FIG. 5, in an embodiment, the first cover 1210 and the second cover 1220 jointly form a receiving space 1230. A part of the reinforcing member 1300 extends into the receiving space 1230 and is connected to the base 1200. In this way, the bottom wall of the accommodating space can be made relatively smooth and flat to prevent interference of the reinforcing member 1300 with an object carried in the accommodating space, thereby improving comfort of the accommodating space.

In some alternate embodiments, the receiving space 1230 is a groove recessed in a front side face of the base 1200. In some other alternate embodiments, the receiving space 1230 is a groove recessed in an upper surface of the base 1200. The part of the reinforcing member 1300 extending into the receiving space 1230 can be completely received in the receiving space 1230 without protruding from the upper surface of the base 1200 to prevent interference of the reinforcing member 1300 with the object carried in the accommodating space, thereby improving comfort of the accommodating space. In some other alternate embodiments, the receiving space 1230 is a groove recessed in a lower surface of the base 1200. The part of the reinforcing member 1300 extending into the receiving space 1230 can be completely received in the receiving space 1230 without protruding from the lower surface of the base 1200, so that the base 1200 can be placed more stably on the seat of the transportation vehicle or the ground. In the above alternate embodiments, the base 1200 may have a single-layer structure or a multi-layer structure, which is not limited in the present disclosure.

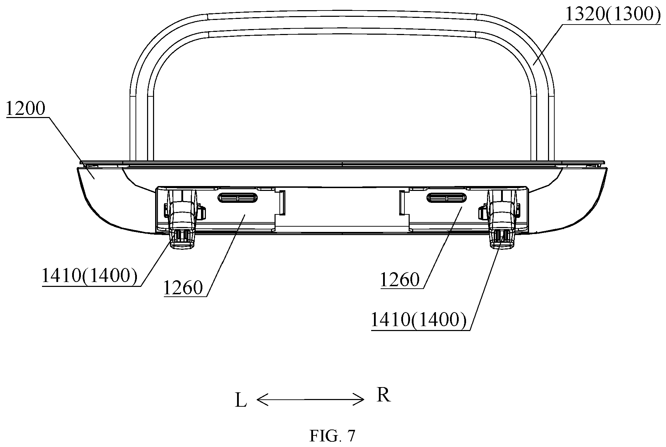

As shown in FIG. 5 and FIG. 7, in an embodiment, the portable carrier 1000 is provided with an anchoring assembly 1400, and the anchoring assembly 1400 is adapted to be connected to the seat of the transportation vehicle to secure the portable carrier 1000 to the seat of the transportation vehicle. The anchoring assembly 1400 includes at least one connecting assembly 1410. The at least one connecting assembly 1410 is configured to be connected to at least one connection point of the seat of the transportation vehicle. In particular, the connecting assembly 1410 is adapted to be connected to an ISOFIX interface, and in this case the "connecting assembly" may also be referred to as the "ISOFIX connector". The at least one connecting assembly 1410 is movably connected to the base 1200 to be switchable between an unfolded position (which may also be referred to as "use position") and a folded position. The base 1200 is provided with at least one folding space 1260. When the at least one connecting assembly 1410 is at the folded position (i.e., when the anchoring assembly 1400 is in a folded state), the at least one connecting assembly 1410 is received in the at least one folding space 1260. When the at least one connecting assembly 1410 is at the unfolded position (i.e., when the anchoring assembly 1400 is in an unfolded state (which may also be referred to as "use state")), the at least one connecting assembly 1410 can extend out of the at least one folding space 1260 to be connected to the at least one connection point of the seat of the transportation vehicle.

Referring to FIG. 5 and FIG. 7, the at least one connecting assembly 1410 is pivotally connected to a rear portion of the base 1200, and the at least one folding space 1260 is arranged on the rear portion of the base 1200. The reinforcing member 1300 is connected to a front portion of the base 1200, and a part of the base 1200 away from the reinforcing member 1300 is the rear portion of the base 1200. The front portion of the base 1200 forms a front side face of the base 1200, and the front side face of the base 1200 continuously transitions from an outer side face of the front side portion 1140 of the carrier body 1100. That is, the front side face of the base 1200 is at least partially flush with the outer side face of the front side portion 1140. The rear portion of the base 1200 forms a rear side face of the base 1200, and the rear side face of the base 1200 continuously transitions from an outer side face of the rear side portion 1160 of the carrier body 1100. That is, the rear side face of the base 1200 is at least partially flush with the outer side face of the rear side portion 1160. In this embodiment, two connecting assemblies 1410 are provided, and the two connecting assemblies 1410 are respectively pivotally connected to the rear side face of the base 1200. Two folding spaces 1260 are provided. The two folding spaces 1260 are arranged at intervals in the left-right direction. In this embodiment, the folding space 1260 is a groove recessed in the rear side face of the base 1200. When the two connecting assemblies 1410 are at a folded position, the two connecting assemblies 1410 are respectively stored in the corresponding folding spaces 1260. For example, an outer side face of the folded connecting assembly 1410 is flush with the outer side face of the base 1200.

In other embodiments, the anchoring assembly 1400 may include two or more connecting assemblies 1410, and two or more folding spaces 1260 are also correspondingly provided. The two or more connecting assemblies 1410 may be correspondingly connected to two or more connection points on the seat of the transportation vehicle.

As shown in FIG. 5 and FIG. 7, in an embodiment, each connecting assembly 1410 may be locked at the folded position by any suitable locking structure. The anchoring assembly 1400 further includes a torsional spring. The torsional spring is configured to drive each connecting assembly 1410 to rotate towards the unfolded position. The torsional spring may be arranged, for example, between each connecting assembly 1410 and the base 1200. When the anchoring assembly 1400 is in the folded state, each connecting assembly 1410 is unlocked, and each connecting assembly 1410 may be automatically popped out through a reaction force of the torsional spring, so as to switch to the unfolded state.

The two connecting assemblies 1410 rotate horizontally in opposite directions to rotate from the folded position to the unfolded position, or from the unfolded position to the folded position. Rotation angles of the two connecting assemblies 1410 are no greater than 90 degrees. In some alternate embodiments, the two connecting assemblies 1410 may rotate horizontally along a same direction to switch to the unfolded position or the folded position.

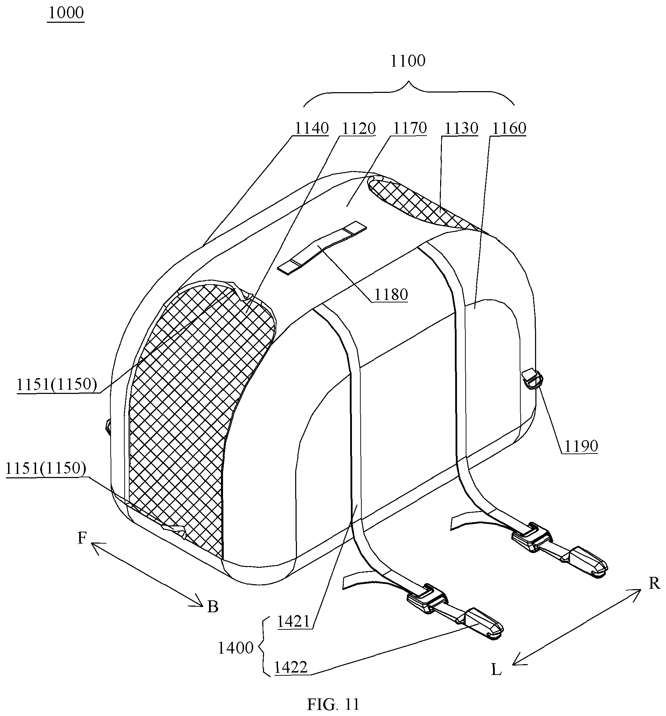

FIG. 11 illustrates a portable carrier 1000 according to another embodiment in the first aspect of the present disclosure. As shown in FIG. 11, in the embodiment, the anchoring assembly 1400 includes at least one Latch connector 1422 and at least one webbing 1421, the at least one Latch connector 1422 is connected to at least one of the base 1200 and the carrier body 1100 through the at least one webbing 1421, and the at least one Latch connector 1422 is configured to be connected to at least one connection point of the seat of the transportation vehicle. In this embodiment, referring to FIG. 11, the anchoring assembly 1400 includes two Latch connectors 1422 and two webbings 1421. The two webbings 1421 may be connected to the rear side portion 1160 of the carrier body 1100 respectively. In some alternate embodiments, the webbing 1421 may be connected to the rear portion of the base 1200. In some other alternate embodiments, the two webbings 1421 are sleeved on the base 1200 and the carrier body 1100, so that the base 1200 and the carrier body 1100 can be separated from the anchoring assembly 1400.

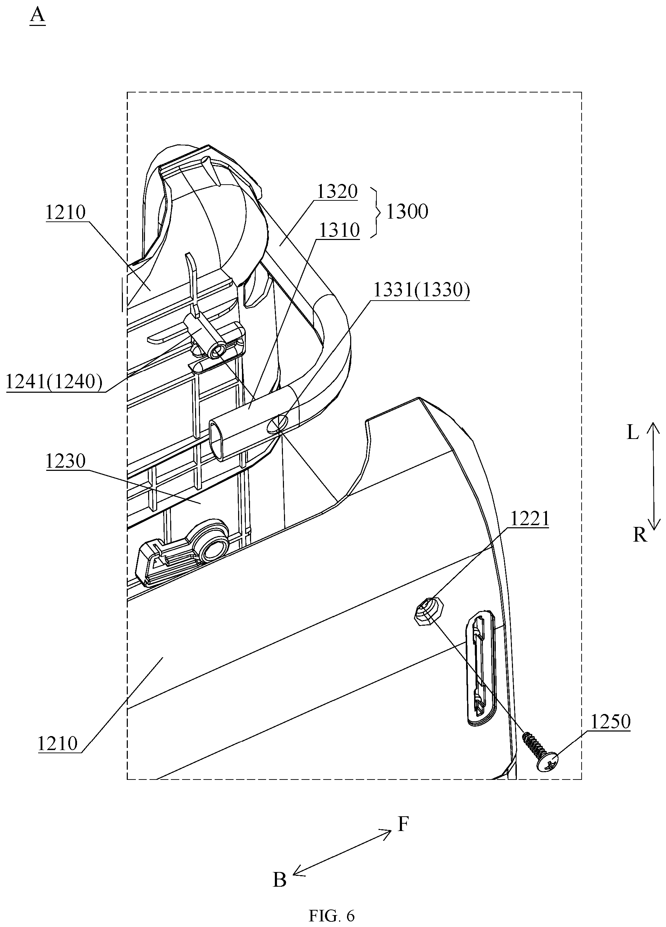

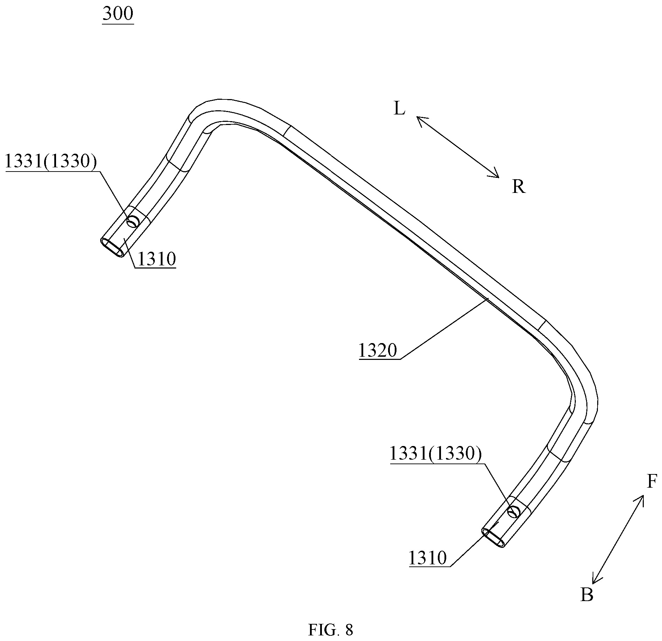

As can be seen from the above, the portable carrier 1000 provided in this aspect is provided with the reinforcing member 1300. FIG. 8 is a schematic diagram of the reinforcing member 1300. Referring to FIG. 1 and FIG. 3, in an embodiment, the reinforcing member 1300 is arranged on at least the front side portion 1140 of the carrier body 1100. Referring to FIG. 6 and FIG. 8, the reinforcing member 1300 includes a reinforcing portion 1320 and a connection portion 1310. The connection portion 1310 is connected to an end portion of the reinforcing portion 1320 and is connected to the base 1200. The reinforcing portion 1320 abuts against the front side portion 1140 of the carrier body 1100. The reinforcing portion 1320 and the connection portion 1310 are substantially perpendicular to each other. Specifically, the connection portion 1310 substantially extends in the front-rear direction. The reinforcing portion 1320 extends generally in a direction parallel to the front side portion 1140. That is, the reinforcing portion 1320 extends substantially in an up-down direction. In other words, the reinforcing portion 1320 extends from the base 1200 to the top portion 1170 of the carrier body 1100. During the use of the portable carrier 1000, the front side portion of the portable carrier 1000 is relatively more susceptible to an external impact or collision. Since the carrier body 1100 is made of a soft fabric sheet, support strength of the carrier body 1100 is relatively low. When the portable carrier 1000 is subjected to an external impact, the carrier body 1100 is easily deformed, thereby causing damage to an object (e.g., an animal) carried in the portable carrier 1000. In this embodiment, by arranging the reinforcing member 1300 on at least the front side portion 1140 of the carrier body 1100, the reinforcing member 1300 can be more effectively utilized to cushion most of an impact force, so as to limit deformation of the carrier body 1100, thereby reducing damage possibly caused by an external impact force to the accommodated object in the portable carrier 1000. In other embodiments, the reinforcing member 1300 may alternatively be arranged on at least one of the rear side portion 1160, the left side portion 1120, and the right side portion 1130 of the carrier body 1100 to further enhance impact resistance of the carrier body 1100, which is not limited in the present disclosure.

In this embodiment, the front side portion 1140 of the carrier body 1100 has a multi-layer fabric structure, and the reinforcing portion 1320 is located in the front side portion 1140. By arranging the reinforcing portion 1320 of the reinforcing member 1300 in the front side portion 1140, the appearance of the carrier body 1100 is not affected, and the deformation of the carrier body 1100 under an external impact force can be better limited. The reinforcing portion 1320 is located between the base 1200 and the top portion 1170 of the carrier body 1100. That is, an end of the reinforcing portion 1320 away from the connection portion 1310 does not exceed a plane where the top portion 1170 is located. In some alternate embodiments, the reinforcing portion 1320 is located in the carrier body 1100 and abuts against an inner side face of the front side portion 1140. That is, the reinforcing portion 1320 extends from the base 1200 into the accommodating space and abuts against a front side wall of the accommodating space. In some other alternate embodiments, the reinforcing portion 1320 extends out of the carrier body 1100 and abuts against an outer side face of the front side portion 1140.

Referring to FIG. 8, the reinforcing member 1300 is an integrally formed component, but is not limited thereto. In this embodiment, the reinforcing portion 1320 is integrally formed, and the connection portion 1310 is integrally formed on the reinforcing portion 1320. The reinforcing member 1300 is made of a hard material, for example, a hard alloy (such as stainless steel or aluminum alloy), plastic or the like. Specifically, the reinforcing member 1300 is formed by bending a hard pipe. In some alternate embodiments, the reinforcing member 1300 may be a non-integrally formed component. Exemplarily, the reinforcing portion 1320 is welded by a plurality of components, and the connection portion 1310 is fixedly connected to the reinforcing portion 1320, or is detachably connected to the reinforcing portion 1320, or is integrally formed with at least one component of the reinforcing portion 1320.

Still referring to FIG. 8, in an embodiment, the reinforcing portion 1320 is in an inverted U shape, but the shape of the reinforcing portion 1320 is not limited thereto. An opening of the reinforcing portion 1320 in the inverted U shape faces the base 1200. Two connection portions 1310 are provided. The two connection portions 1310 are respectively connected to two ends of the reinforcing portion 1320 in the inverted U shape. In some alternate embodiments, the reinforcing portion 1320 is in a shape of, for example, inverted V, M, rectangle, or the like, which is not limited in the present disclosure.

Also referring to FIG. 1, an area of the front side portion 1140 not abutted against by the reinforcing portion 1320 of the reinforcing member 1300 forms a clearance region 1141, and the clearance region 1141 is provided with a breathable mesh, thereby improving breathability of the accommodating space in the portable carrier 1000. In this embodiment, the opening of the reinforcing portion 1320 in the inverted U shape faces the base 1200, the clearance region 1141 corresponds to a space jointly defined by the reinforcing portion 1320 in the inverted U shape and the base 1200, and the breathable mesh at least partially covers the clearance region 1141.

As shown in FIG. 6, the connection portion 1310 is received in the receiving space 1230 and is limited in the receiving space 1230 through a limiting structure. The limiting structure includes a first limiting portion 1330 arranged on the connection portion 1310 and a second limiting portion 1240 arranged on the base 1200. The second limiting portion 1240 is located in the receiving space 1230. The first limiting portion 1330 and the second limiting portion 1240 cooperate with each other so as to limit the connection portion 1310 of the reinforcing member 1300 in the receiving space 1230. Specifically, one of the first limiting portion 1330 and the second limiting portion 1240 is a limiting pin 1241, the other of the first limiting portion 1330 and the second limiting portion 1240 is a limiting hole 1331, and the limiting pin 1241 passes through the limiting hole 1331 to achieve limit engagement. In this embodiment, the limiting hole 1331 extends through the connection portion 1310. The limiting pin 1241 is arranged in the receiving space 1230 and is connected to one of the first cover 1210 and the second cover 1220, the other of the first cover 1210 and the second cover 1220 is provided with a fixing hole 1221, and the fixing hole 1221 is positioned opposite to the limiting pin 1241. A part of the fastener 1250 passes through the fixing hole 1221 and the limiting hole 1331 and is in threaded connection with the limiting pin 1241.

In some alternate embodiments, the limiting pin 1241 may not be provided. The first limiting portion 1330 is the limiting hole 1331 arranged in the connection portion 1310, and the second limiting portion 1240 is formed by the fastener 1250. The fastener 1250 passes through the limiting hole 1331 and is in threaded connection with the base 1200.

As shown in FIG. 2, in an embodiment, in order to improve the breathability of the accommodating space in the portable carrier 1000, the left side portion 1120 and the right side portion 1130 of the carrier body 1100 are both provided with a breathable mesh. The breathable mesh may be openably and closably arranged on the carrier body 1100 by, for example, a zipper or the like, thereby allowing the accommodating space to be opened or closed. When the portable carrier 1000 is placed on the seat of the transportation vehicle, a side of the portable carrier 1000 close to a vehicle door (i.e., the left side portion 1120 or the right side portion 1130 of the portable carrier 1000) is relatively more susceptible to a collision from a side direction. Therefore, at least one of the left side portion 1120 and the right side portion 1130 has a to-be-cushioned region. A detachable cushioning body 1510 is arranged in the to-be-cushioned region. Specifically, the cushioning body 1510 is detachably connected to the carrier body 1100 through a connecting mechanism and covers an outer side face of the to-be-cushioned region, to cushion and absorb an external collision force that the to-be-cushioned region may be subjected to, thereby reducing damage caused by an impact force to the object carried in the portable carrier 1000.

Referring to FIG. 2, in an embodiment, the to-be-cushioned region may be located in only one of the left side portion 1120 and the right side portion 1130 (e.g., the left side portion 1120 of the carrier body 1100), and the cushioning body 1510 detachably covers the to-be-cushioned region. In an alternate embodiment, the to-be-cushioned region may be arranged in the left side portion 1120 and the right side portion 1130 respectively. In the alternate embodiment, a user may selectively mount the cushioning body 1510 for the to-be-cushioned region on the side closer to the vehicle door according to a placement position of the portable carrier 1000 on the seat of the transportation vehicle, or may mount cushioning bodies 1510 for both the to-be-cushioned regions on the left side portion 1120 and the right side portion 1130.

A region where the breathable mesh of at least one of the left side portion 1120 and the right side portion 1130 is located is formed into the to-be-cushioned region. Referring to FIG. 1 and FIG. 2, in this embodiment, a region where the breathable mesh of the left side portion 1120 is located is formed into the to-be-cushioned region. The shape of the cushioning body 1510 matches the shape of the to-be-cushioned region, that is, matches the shape of the breathable mesh of the left side portion 1120. In some alternate embodiments, the shape of the cushioning body 1510 may not match the shape of the to-be-cushioned region, as long as the cushioning body 1510 can basically cover the to-be-cushioned region.

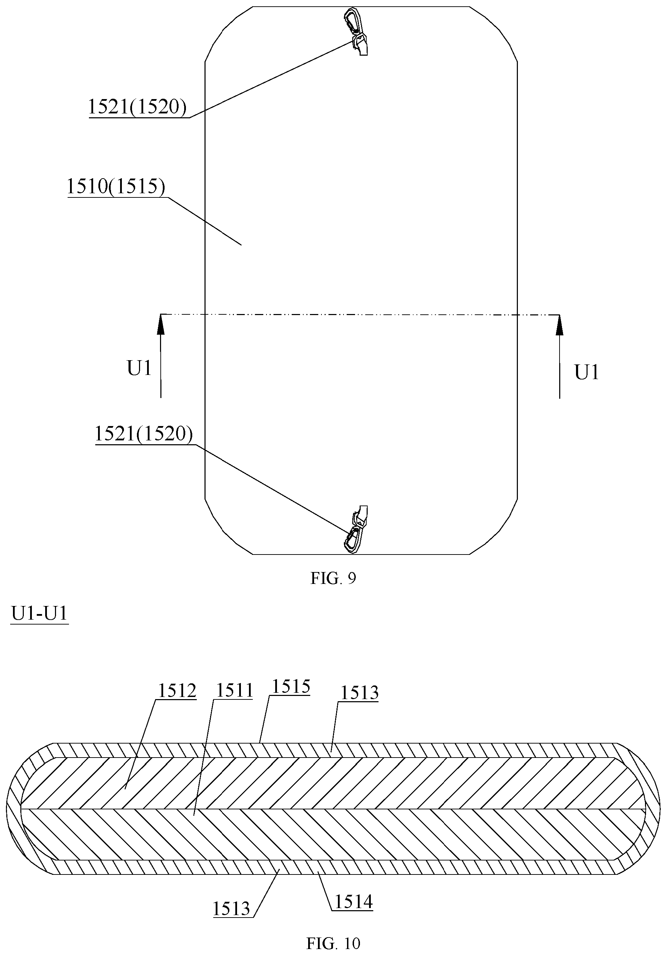

As shown in FIG. 9 and FIG. 10, in an embodiment, the cushioning body 1510 includes a first cushioning layer 1511, a second cushioning layer 1512, and a protective sheath 1513, and the first cushioning layer 1511 and the second cushioning layer 1512 are stacked. The protective sheath 1513 covers the first cushioning layer 1511 and the second cushioning layer 1512. The protective sheath 1513 can prevent separation of the first cushioning layer 1511 and the second cushioning layer 1512 of the cushioning body 1510 from each other during use, and can also facilitate the mounting of the cushioning body 1510 on the carrier body 1100. The cushioning body 1510 has a back surface 1515 facing the carrier body 1100 and a front surface 1514 away from the carrier body 1100. A side of the carrier body 1100 facing the cushioning body 1510 is provided with a breathable mesh. The front surface 1514 of the cushioning body 1510 is formed on a side of the protective sheath 1513 away from the carrier body 1100.

The first cushioning layer 1511 is farther from the carrier body 1100 than the second cushioning layer 1512. That is, the second cushioning layer 1512 is close to the carrier body 1100. In other words, the first cushioning layer 1511 is arranged close to the front surface 1514 of the cushioning body 1510, and the second cushioning layer 1512 is arranged close to the back surface 1515 of the cushioning body 1510. The first cushioning layer 1511 is more elastic than the second cushioning layer 1512. Specifically, the second cushioning layer 1512 has a plate-like structure, and the second cushioning layer 1512 is made of at least one material selected from EPP, EPS, and RPO. The first cushioning layer 1511 is made of foam. The cushioning body 1510 can absorb the external impact force well, and can also reduce the deformation of the breathable mesh of the carrier body 1100 under the external impact force.

Certainly, in other embodiments, the cushioning body 1510 may alternatively be provided with more cushioning layers, such as three or four cushioning layers. Exemplarily, the cushioning body 1510 is provided with a third cushioning layer, and the third cushioning layer is located between the first cushioning layer 1511 and the second cushioning layer 1512 or is located on one side of the first cushioning layer 1511. The third cushioning layer may be a polyethylene (PE) board, an expanded polypropylene (EPP) board, or the like.

As shown in FIG. 2 and FIG. 9, in an embodiment, the connecting mechanism includes a first mating part 1520 and a second mating part 1150. The cushioning body 1510 is provided with a plurality of first mating parts 1520, and the plurality of first mating parts 1520 are arranged on the back surface 1515 of the cushioning body 1510. The carrier body 1100 is correspondingly provided with a plurality of second mating parts 1150. The plurality of first mating parts 1520 are adapted to be mated with the plurality of second mating parts 1150, so that the cushioning body 1510 can basically cover the to-be-cushioned region. The plurality of first mating parts 1520 are all arranged close to edges of the cushioning body 1510. Specifically, the cushioning body 1510 is generally elongated, and the first mating parts 1520 are respectively provided at two ends of the cushioning body 1510.

As shown in FIG. 2, one of the first mating part 1520 and the second mating part 1150 is a hook 1521, the other of the first mating part 1520 and the second mating part 1150 is a hook clasp 1151, and the hook 1521 is adapted to be hooked to the hook clasp 1151. In this embodiment, the first mating part 1520 arranged on the cushioning body 1510 is the hook 1521, and the second mating part 1150 arranged on the carrier body 1100 is the hook clasp 1151. The hook clasp 1151 may be formed by the webbing 1421 sewn on the carrier body 1100. In some alternate embodiments, the first mating part 1520 and the second mating part 1150 are, for example, a pair of hook-and-loop fasteners or snap fasteners respectively provided on the carrier body 1100 and the cushioning body 1510, which is not limited in the present disclosure.

A second aspect of the present disclosure provides an improved portable carrier. As described above, the portable carrier includes, but is not limited to, a carrycot, a pet carrier, a pet carriage, a pet backpack, and other carriers suitable for carrying animals. The portable carrier provided in this aspect will be described below by taking a pet carrier as an example.

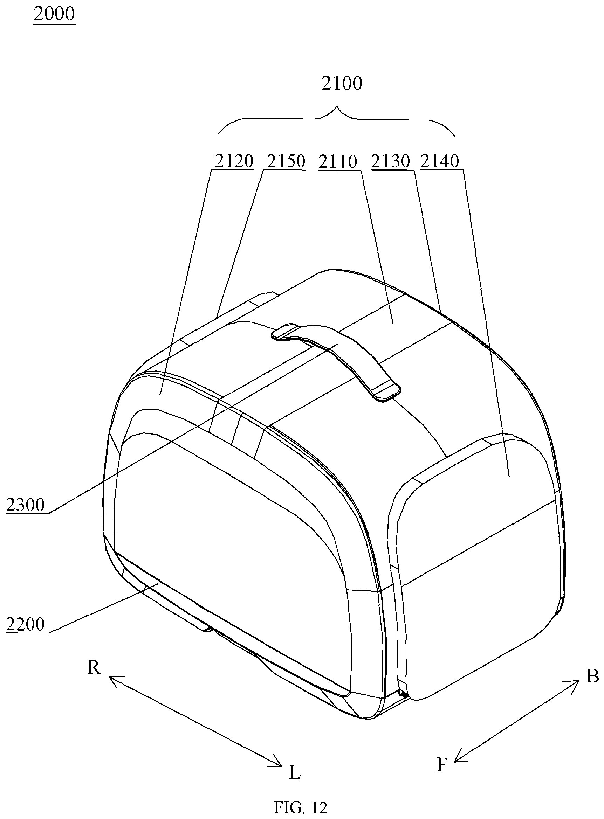

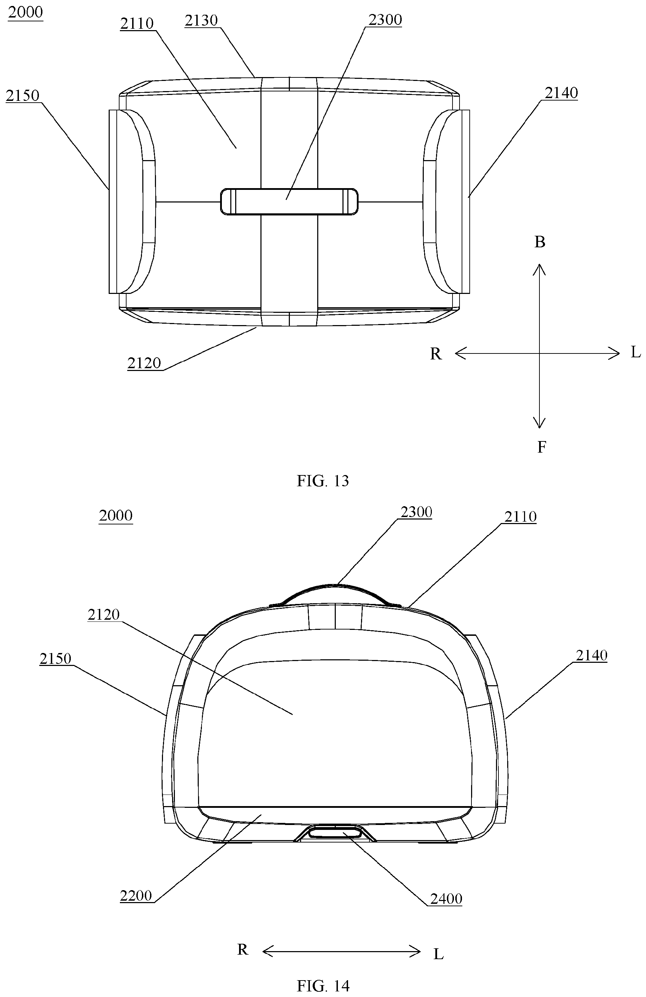

FIG. 12 schematically illustrates a portable carrier according to an embodiment in the second aspect of the present disclosure. FIG. 13 to FIG. 15 are respectively a top view, a front view, and a right side view of the portable carrier in FIG. 12. The portable carrier 2000 may be carried around, and may be secured to a seat of a transportation vehicle such as a train or a car. The portable carrier 2000 is mounted, for example, on the seat of the transportation vehicle in a longitudinal direction (corresponding to the F-B direction in the figure), so that one side of the two opposite sides thereof in the longitudinal direction is close to the backrest of the seat, and the other side is away from the backrest of the seat. Hereinafter, the side of the portable carrier 2000 close to the backrest of the seat is called a rear side, and the side of the portable carrier 2000 away from the seat is called a front side. The portable carrier 2000 includes a carrier body 2100 and a base 2200. The carrier body 2100 is arranged above the base 2200 and is supported by the base 2200. The carrier body 2100 and the base 2200 jointly form an accommodating space used to accommodate a pet. The base 2200 is generally made of a hard material, for example, a high-strength polymer material such as polypropylene (PP) or polyethylene (PE). The carrier body 2100 is generally made of a soft material, for example, a fabric material such as natural fiber fabrics, synthetic fiber fabrics, or man-made fiber fabrics.

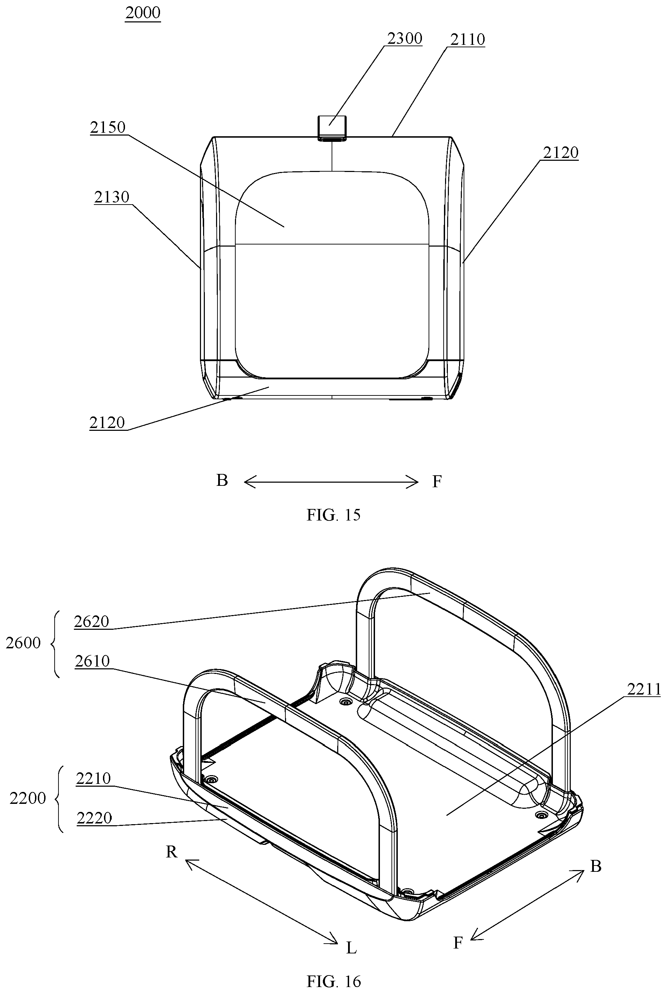

Referring to FIG. 12 to FIG. 15, the carrier body 2100 has a top portion 2110, a front side portion 2120 and a rear side portion 2130 on opposite sides in the longitudinal direction, and a left side portion 2140 and a right side portion 2150 on opposite sides in a transverse direction. The top portion 2110 forms a top wall of the accommodating space, the front side portion 2120 forms a front wall of the accommodating space, the rear side portion 2130 forms a rear wall of the accommodating space, the left side portion 2140 forms a left wall of the accommodating space, and the right side portion 2150 forms a right wall of the accommodating space. A support surface of the base 2200 forms a bottom wall of the accommodating space. As will be described below, the base 2200 includes a first cover 2210 and a second cover 2220 (referring to FIG. 16). In this embodiment, bottom-end edges of the front side portion 2120, the rear side portion 2130, the left side portion 2140, and the right side portion 2150 of the carrier body 2100 are sandwiched between the first cover 2210 and the second cover 2220 of the base 2200. In some other embodiments, the carrier body 2100 has a bottom portion connected to the bottom-end edges of the front side portion 2120, the rear side portion 2130, the left side portion 2140, and the right side portion 2150, and the bottom portion is sandwiched between the first cover 2210 and the second cover 2220 of the base 2200.

In this embodiment, the left side portion 2140 and the right side portion 2150 of the carrier body 2100 are symmetrically arranged, so only the right side view of the portable carrier 2000 is illustrated. It may be understood that in some other embodiments, the left side portion 2140 and the right side portion 2150 of the carrier body 2100 may not be symmetrically arranged. In this embodiment, the portable carrier 2000 further includes a handle 2300. The handle 2300 is arranged on the top portion 2110 of the carrier body 2100 and is adapted to be held by the user so that the user can lift or carry the portable carrier 2000. In this embodiment, the handle 2300 is a single handle. In other embodiments, the handle 2300 may be a double handle.

As shown in FIG. 14, the portable carrier 2000 further includes an operating member 2400. The operating member 2400 is arranged on the base 2200, which is configured to be operable to cause the anchoring assembly (not shown in FIG. 14, referring to FIG. 9) to switch between the folded state and the unfolded state or between the locked state and the unlocked state. The anchoring assembly is adapted to be connected to the seat of the transportation vehicle to secure the portable carrier 2000 to the seat of the transportation vehicle. Specific structures and operating manners of the operating member and the anchoring assembly will be described in detail below.

Referring to FIG. 16 to FIG. 18, the portable carrier 2000 further includes a reinforcing member 2600, and the reinforcing member 2600 is connected to the base 2200. The base 2200 includes a first cover 2210 and a second cover 2220. The first cover 2210 and the second cover 2220 may be detachably connected through a fastener such as a screw or a bolt, or may be detachably connected through, for example, a snap connection structure. The first cover 2210 has a support surface 2211 at the top. As described above, the support surface 2211 forms the bottom wall of the accommodating space. A part of the reinforcing member 2600 is embedded between the first cover 2210 and the second cover 2220, that is, embedded into the base 2200. Another part of the reinforcing member 2600 is embedded into the front side portion 2120 or the rear side portion 2130. In particular, a part of the reinforcing member 2600 that extends substantially parallel to the support surface 2211 is embedded into the base 2200, and a part of the reinforcing member 2600 that extends substantially perpendicularly to the support surface 2211 is embedded into the front side portion 2120 or the rear side portion 2130. In this way, the reinforcing member 2600 may not interfere with the object carried in the accommodating space, thereby improving comfort of the accommodating space.

The reinforcing member 2600 is made of a high-strength material. The high-strength material includes, but is not limited to, high-strength steel, high-strength plastics, high-strength aluminum alloy, a high-strength fiber material, and the like. The reinforcing member 2600 has high structural strength and good toughness, and can withstand high pressure and impact. The reinforcing member 2600 may be formed by bending a high-strength pipe. In the embodiments of the second aspect, the reinforcing member 2600 can provide an impact protection function, and therefore, the "reinforcing member" may also be referred to as an "impact protection component". Accordingly, the first reinforcing member 2610 and the second reinforcing member 2620 may also be referred to as "first impact protection component" and "second impact protection component".

The reinforcing member 2600 includes a first reinforcing member 2610 and a second reinforcing member 2620. A portion of the first reinforcing member 2610 is arranged on the front side portion 2120 of the carrier body 2100, and another portion of the first reinforcing member 2610 is connected to the base 2200. A portion of the second reinforcing member 2620 is arranged on the rear side portion 2130 of the carrier body 2100, and another portion of the second reinforcing member 2620 is connected to the base 2200. Since the carrier body 2100 is generally made of a soft fabric sheet, support strength of the carrier body 2100 is relatively low. When the portable carrier 2000 is subjected to an external impact, the carrier body 2100 is easily deformed, thereby causing damage to the pet carried in the portable carrier 2000. In this embodiment, by arranging the first reinforcing member 2610 and the second reinforcing member 2620 on at least the front side portion 2120 and the rear side portion 2130 of the carrier body 2100, the first reinforcing member 2610 and the second reinforcing member 2620 can be effectively utilized to cushion most of an impact force, so as to limit deformation of the carrier body 2100, thereby reducing damage possibly caused by an external impact force to the pet carried in the portable carrier 2000. In particular, as described above, the portable carrier 2000 is mounted on the seat of the transportation vehicle in the longitudinal direction, so that one side of the two opposite sides thereof in the longitudinal direction is close to the backrest of the seat, and the other side is away from the backrest of the seat. The first reinforcing member 2610 and the second reinforcing member 2620 are respectively arranged on the two opposite sides of the portable carrier 2000 in the longitudinal direction, that is, the side close to or away from the backrest of the seat, and the side is a main stress-bearing surface of the portable carrier 2000 when the transportation vehicle encounters an emergency stop or a collision accident. In the event of an emergency stop or a collision accident, the first reinforcing member 2610 and the second reinforcing member 2620 arranged on the two opposite sides of the portable carrier 2000 in the longitudinal direction can provide a stronger impact protection effect to disperse the impact force, thereby reducing damage to the pet in the portable carrier 2000 caused by the impact force.

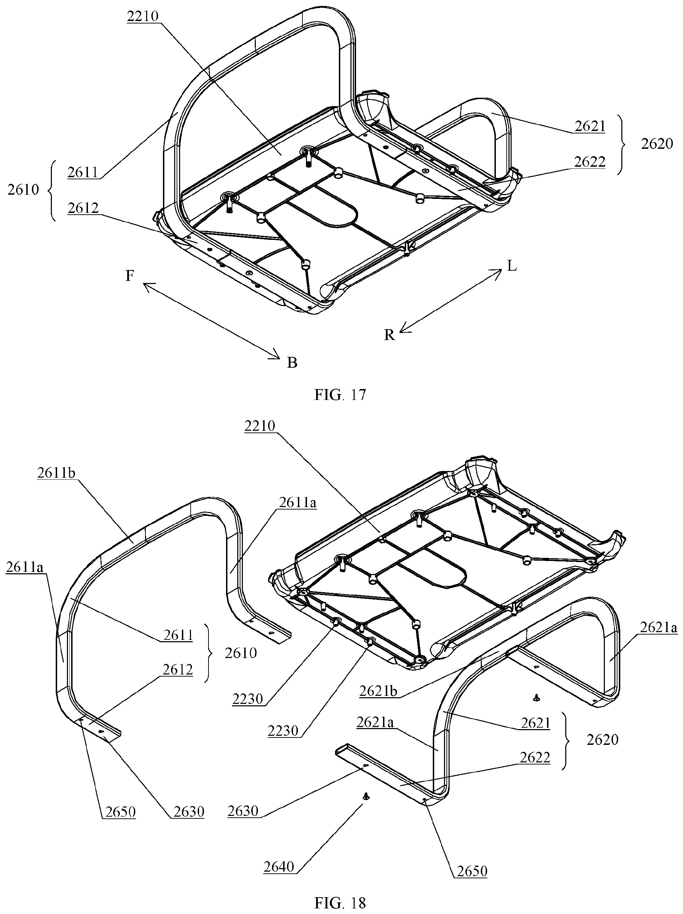

The first reinforcing member 2610 and the second reinforcing member 2620 have similar structures. The first reinforcing member 2610 includes a first reinforcing portion 2611 and a first connection portion 2612 extending from the first reinforcing portion 2611. The second reinforcing member 2620 includes a second reinforcing portion 2621 and a second connection portion 2622 extending from the second reinforcing portion 2621. The first connection portion 2612 is substantially perpendicular to the first reinforcing portion 2611. The second connection portion 2622 is substantially perpendicular to the second reinforcing portion 2621. Specifically, the first reinforcing portion 2611 and the second reinforcing portion 2621 substantially extend from the base 2200 to the top portion 2110 of the carrier body 2100 in a direction perpendicular to the support surface 2211, and the first connection portion 2612 and the second connection portion 2622 substantially extend in the longitudinal direction and parallel to the support surface 2211. The first connection portion 2612 and the second connection portion 2622 are adapted to be connected to the base 2200. In this embodiment, the first connection portion 2612 and the second connection portion 2622 are connected to the first cover 2210 of the base 2200. In some other embodiments, the first connection portion 2612 and the second connection portion 2622 may alternatively be connected to the second cover 2220 of the base 2200. The first connection portion 2612 and the second reinforcing portion 2621 are connected together. For example, one of a tail end of the first connection portion 2612 and a tail end of the second connection portion 2622 is sleeved on the other of the tail end of the first connection portion 2612 and the tail end of the second connection portion 2622, and parts of the tail end of the first connection portion 2612 and the tail end of the second connection portion 2622 sleeved with each other are fastened by a fastener. For example, referring to FIG. 18, parts of the tail end of the first connection portion 2612 and a tail end of the second reinforcing portion 2621 sleeved with each other are provided with assembly holes 2630 such as screw holes, and the tail end of the first connection portion 2612 and the tail end of the second reinforcing portion 2621 are fixedly connected through a fastener 2640 such as a screw or a bolt passing through the assembly holes 2630.

In this embodiment, the first reinforcing member 2610 and the second reinforcing member 2620 of the reinforcing member 2600 are arranged separately. A tail end of the first reinforcing member 2610 (i.e., the tail end of the first connection portion 2612) is fastened to a tail end of the second reinforcing member 2620 (i.e., the tail end of the second reinforcing portion 2621) by sleeving one on other, to form an integrated structure. The reinforcing member 2600 having the integrated structure can further improve structural strength thereof and a cushioning effect. In some other embodiments, the tail end of the first reinforcing member 2610 (i.e., the tail end of the first connection portion 2612) and the tail end of the second reinforcing member 2620 (i.e., the tail end of the second reinforcing portion 2621) may alternatively be fastened together by welding, bonding, or other fastening structures. In some other embodiments, the first reinforcing member 2610 and the second reinforcing member 2620 may be integrally formed. That is, the reinforcing member 2600 is a single component as a whole. Before the reinforcing member 2600 is connected to the base 2200, a procedure of assembling the first reinforcing member 2610 and the second reinforcing member 2620 together is not required.

In this embodiment, the reinforcing member 2600 is fastened to the first cover 2210 of the base 2200 through a fastening structure. The fastening structure includes a stud 2230 arranged on a lower surface of the first cover 2210 and a fixing hole 2650 arranged in the reinforcing member 2600. A plurality of studs 2230 are arranged on the lower surface of the first cover 2210. The first connection portion 2612 and the second connection portion 2622 are provided with fixing holes 2650 positioned corresponding to the studs 2230. Fasteners such as screws are adapted to pass through the fixing holes 2650 of the first connection portion 2612 and the second connection portion 2622 and be in threaded connection with the studs 2230, so as to fasten the first reinforcing member 2610 and the second reinforcing member 2620 to the lower surface of the first cover 2210. In some other embodiments, a plurality of screw holes may be provided in the lower surface of the first cover 2210, to replace the plurality of studs 2230, and fasteners such as screws are adapted to pass through the fixing holes 2650 of the first connection portion 2612 and the second connection portion 2622 and be in threaded connection with the screw holes. In some other embodiments, the first reinforcing member 2610 and the second reinforcing member 2620 may alternatively be fastened to the lower surface of the first cover 2210 by welding or bonding. In this embodiment, the reinforcing member 2600 is connected to the lower surface of the first cover 2210 of the base 2200. In some other embodiments, the reinforcing member 2600 may alternatively be connected to an upper surface of the second cover 2220 of the base 2200.

In this embodiment, the first reinforcing portion 2611 of the first reinforcing member 2610 and the second reinforcing portion 2621 of the second reinforcing member 2620 are both arranged substantially in a direction perpendicular to the support surface 2211, and are respectively located in the front side portion 2120 and the rear side portion 2130. In this embodiment, the front side portion 2120 and the rear side portion 2130 of the carrier body 2100 both have a multi-layer fabric structure. By arranging the first reinforcing portion 2611 and the second reinforcing portion 2621 respectively in the front side portion 2120 and the rear side portion 2130, that is, in the multi-layer fabric structures of the front side portion 2120 and the rear side portion 2130, the appearance of the carrier body 2100 is not affected, and the deformation of the carrier body 2100 under an external impact force can be better limited. In some other embodiments, the first reinforcing portion 2611 may be arranged outside the front side portion 2120 in close contact with an inner side face of the front side portion 2120, and the second reinforcing portion 2621 may be arranged outside the rear side portion 2130 in close contact with an inner side face of the rear side portion 2130. That is, the first reinforcing portion 2611 and the second reinforcing portion 2621 extend into the accommodating space from the base 2200, and are respectively in close contact with the front side wall and the rear side wall of the accommodating space. In some other embodiments, the first reinforcing portion 2611 may be arranged outside the front side portion 2120 in close contact with an outer side face of the front side portion 2120, and the second reinforcing portion 2621 may be arranged outside the rear side portion 2130 in close contact with an outer side face of the rear side portion 2130.

The first reinforcing portion 2611 of the first reinforcing member 2610 and the second reinforcing portion 2621 of the second reinforcing member 2620 extend upwards from a front edge and a rear edge of the base 2200 respectively, and extend into the front side portion 2120 and the rear side portion 2130 respectively. In this embodiment, the first reinforcing portion 2611 and the second reinforcing portion 2621 have a same structure as each other. In some other embodiments, the first reinforcing portion 2611 and the second reinforcing portion 2621 may have different structures from each other.

Referring to FIG. 18, in this embodiment, the first reinforcing portion 2611 and the second reinforcing portion 2621 both have an inverted U-shaped structure, the first reinforcing portion 2611 includes two first parallel parts 2611a arranged oppositely and a first connecting part 2611b configured to connect an end of each of the two first parallel parts 2611a, and the second reinforcing portion 2621 includes two second parallel parts 2621a arranged oppositely and a second connecting part 2621b configured to connect an end of each of the two second parallel parts 2621a. The first reinforcing member 2610 includes two first connection portions 2612, and the two first connection portions 2612 extend respectively from the other ends of the two first parallel parts 2611a of the first reinforcing portion 2611 having the inverted U-shaped structure. The second reinforcing member 2620 includes two second connection portions 2622, and the two second connection portions 2622 extend respectively from the other ends of the two second parallel parts 2621a of the second reinforcing portion 2621 having the inverted U-shaped structure. The two parallel parts 2611a and 2621a of the inverted U-shaped structure of each of the first reinforcing portion 2611 and the second reinforcing portion 2621 are close to the left side portion 2140 and the right side portion 2150 respectively, and the connecting parts 2611b and 2621b are close to the top portion 2110. In some other embodiments, the first reinforcing portion 2611 or the second reinforcing portion 2621 may have an inverted V-shaped, M-shaped, or rectangular structure.

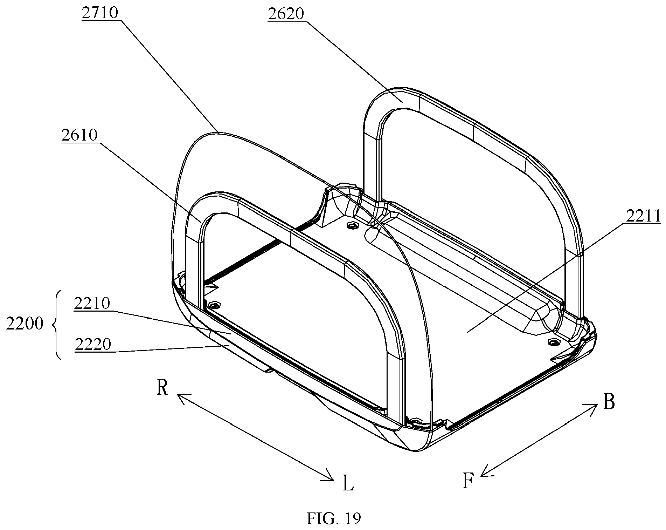

FIG. 19 is a schematic diagram of a portable carrier after removal of a carrier body according to another embodiment of the present disclosure. In this embodiment, the portable carrier 2000 further includes a first support bar 2710, and the first support bar 2710 is connected to the base 2200 and is arranged close to the front side portion 2120 or in the front side portion 2120. Specifically, the first support bar 2710 has an inverted U-shaped structure, with two ends respectively connected to two ends of a front edge of the base 2200. In this embodiment, the first support bar 2710 is embedded into edges of the top portion 2110, the left side portion 2140, and the right side portion 2150 adjacent to the front side portion 2120. Similar to the front side portion 2120 and the rear side portion 2130, the top portion 21 10, the left side portion 2140, and the right side portion 2150 all have a multi-layer fabric structure. By arranging the first support bar 2710 inside the edges of the top portion 2110, the left side portion 2140, and the right side portion 2150 adjacent to the front side portion 2120, the appearance of the carrier body 2100 is not affected, and the carrier body 2100 can be better supported. In some other embodiments, the first support bar 2710 may be embedded into edges of the front side portion 2120 adjacent to the top portion 2110, the left side portion 2140, and the right side portion 2150. The first support bar 2710 is made of a highly resilient material. The highly resilient material includes, but is not limited to, highly resilient steel, highly resilient plastics, highly resilient aluminum alloy, a highly resilient fiber material, or other materials that can quickly restore their original shapes and sizes after being subjected to external forces. For example, the first support bar 2710 may be an iron bar or a plastic steel bar. The first support bar 2710 has high elasticity and good mechanical properties. Through the arrangement of the first support bar 2710, the connection between the top portion 2110, the left side portion 2140, and the right side portion 2150 and the front side portion 2120 can be made more rigid, and accordingly, the entire carrier body 2100 can be rendered more rigid. That is, the carrier body 2100 can be better supported and not easily deformed. Especially if the top collapses and deforms after being pressed by a heavy object, it can return to the original shape after the heavy object is removed, ensuring that the top is still crisp and does not collapse.

In this embodiment, only the first support bar 2710 adjacent to the front side portion 2120 or in the front side portion 2120 is provided. It may be understood that in some other embodiments, the first support bar 2710 adjacent to the rear side portion 2130 or in the rear side portion 2130 may be provided. In some other embodiments, the first support bar 2710 adjacent to the left side portion 2140 or in the left side portion 2140 may be provided, and/or the first support bar 2710 adjacent to the right side portion 2150 or in the right side portion 2150 may be provided.

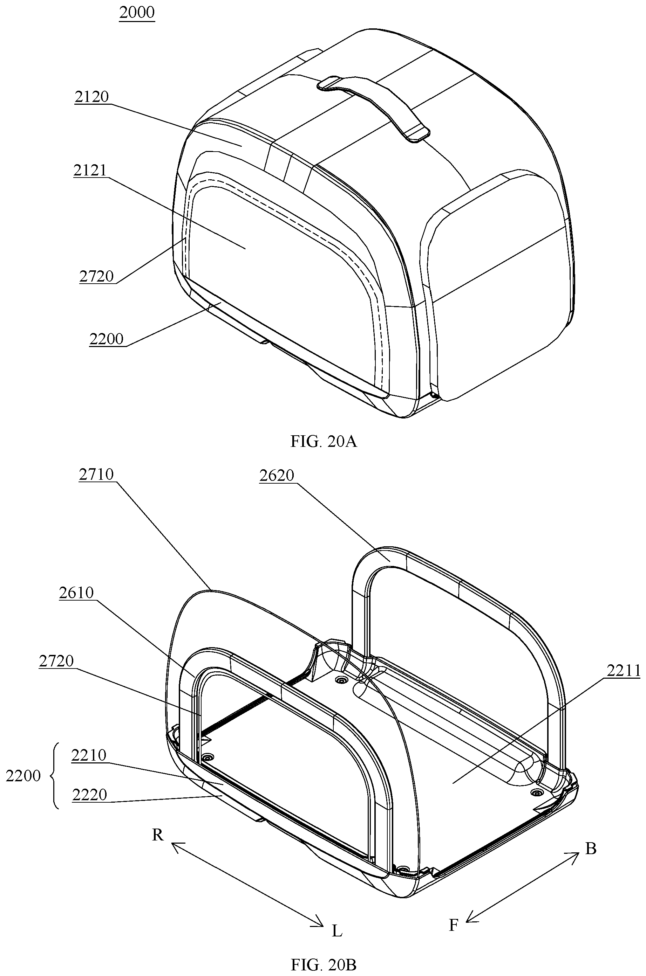

FIG. 20A illustrates a portable carrier according to yet another embodiment of the present disclosure. In this embodiment, the front side portion 2120 of the portable carrier 2000 is provided with a front cover 2121, and the front cover 2121 is adapted to selectively open or close a front window arranged in the front side portion 2120. When the front cover 2121 is opened, the pet may be, for example, placed into the carrier body 2100 or the pet may be taken out of the carrier body 2100. A bottom edge of the front cover 2121 is fastened to a bottom end of the front side portion 2120, and two side edges and a top edge of the front cover 2121 are connected to the front side portion 2120 through, for example, a zipper.

In this embodiment, the portable carrier 2000 further includes a second support bar 2720. The position of the second support bar 2720 is schematically marked with a dotted line in FIG. 20A. The second support bar 2720 is arranged in the front side portion 2120, which is invisible from the outside of the portable carrier 2000. The second support bar 2720 is connected to the base 2200 and extends along the two side edges and the top edge of the front cover 2121, to support the front window closed by the front cover 2121.

Referring to FIG. 20B, the second support bar 2720 has a similar structure to the first support bar 2710 and may be made of a similar material to the first support bar 2710, which is not described in detail herein again. In some other embodiments, in a case that a rear window is provided in the rear side portion 2130 of the carrier body 2100 and the rear side portion 2130 is correspondingly provided with a rear cover configured to close the rear window, the rear side portion 2130 may also be provided with the second support bar 2720 similarly to the front side portion 2120. In some other embodiments, in a case that the first reinforcing member 2610 is arranged around the front window of the front side portion 2120, since the first reinforcing member 2610 has a certain supporting effect on the front window, there is no need to provide the second support bar 2720 around the front window. Correspondingly, in a case that the second reinforcing member 2620 is arranged around the rear window of the rear side portion 2130, there is no need to provide the second support bar 2720 around the rear window.

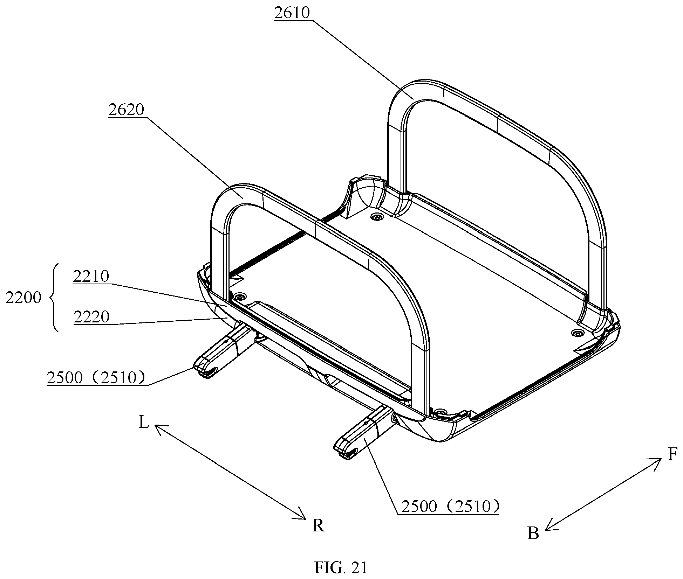

Referring to FIG. 21, as described above, the portable carrier 2000 further includes an anchoring assembly 2500, and the anchoring assembly 2500 is arranged on the rear portion of the base 2200. The anchoring assembly 2500 is configured to secure the portable carrier 2000 to the seat of the transportation vehicle, for example, a seat of a train or a car. A connecting assembly 2510 of the anchoring assembly 2500 includes an ISOFIX connector complying with ISOFIX specifications and a LATCH connector complying with LATCH specifications. Correspondingly, the seat of the transportation vehicle is provided with an ISOFIX interface or a LATCH interface to be connected to the ISOFIX connector or the LATCH connector of the portable carrier 2000. In this embodiment, the connecting assembly 2510 of the anchoring assembly 2500 is an ISOFIX connector. In other embodiments, the connecting assembly 2510 of the anchoring assembly 2500 may be a LATCH connector.

In this embodiment, the anchoring assembly 2500 includes two connecting assemblies 2510, and the two connecting assemblies 2510 are pivotally connected to the rear portion of the base 2200, to be switchable between an unfolded position (which may also be referred to as "use position") and a folded position. When the connecting assembly 2510 is at the folded position, the anchoring assembly 2500 is in the folded state. When the connecting assembly 2510 is at the unfolded position, the anchoring assembly 2500 is in the unfolded state. The connecting assembly 2510 at the unfolded position is adapted to be connected to an ISOFIX interface arranged on the seat of the transportation vehicle. The connecting assembly 2510 has a locked state in which it can be locked to a connection head of the ISOFIX interface of the seat of the transportation vehicle, and an unlocked state in which it can be separated from the connection head. When not locked with the connection head, the connecting assembly 2510 remains in the unlocked state. In particular, when the connecting assembly 2510 is at the folded position, the connecting assembly 2510 is in the unlocked state. During the locking of the connecting assembly 2510 with the connection head, the connecting assembly 2510 is driven by the connection head to switch to the locked state.

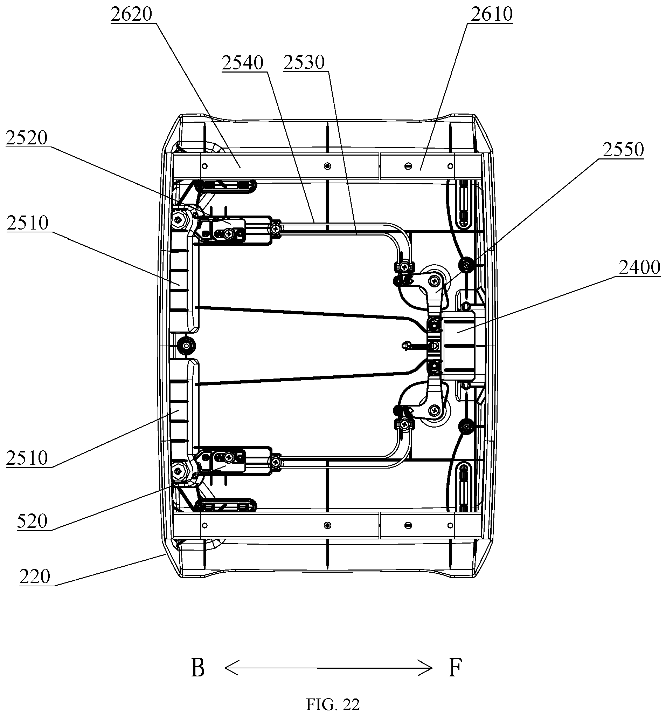

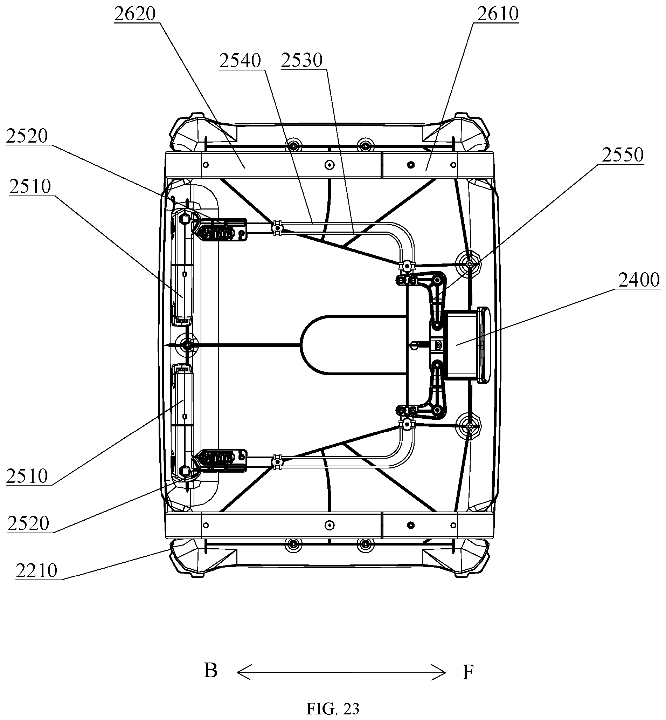

Referring to FIG. 22 and FIG. 23, the anchoring assembly 2500 further includes a locking member 2520 connected to the connecting assembly 2510. The locking member 2520 is slidably arranged on the base 2200 and is movable between a lock position and an unlock position relative to the base 2200. When the locking member 2520 is at the lock position, the locking member 2520 locks the connecting assembly 2510, so that movement of the connecting assembly 2510 is limited. When the locking member 2520 is at the unlock position, the locking member 2520 unlocks the connecting assembly 2510. In this embodiment, two locking members 2520 are arranged corresponding to the two connecting assemblies 2510. One set of the connecting assembly 2510 and the locking member 2520 will be described below as an example.

The connecting assembly 2510 and the locking member 2520 may be controlled by the operating member 2400. The operating member 2400 is operably arranged on the front portion of the base 2200 and is connected to the locking member 2520. When the operating member 2400 is operated if the connecting assembly 2510 is at different positions, the connecting assembly 2510 responds with different actions. Specifically, in a case that the connecting assembly 2510 is at the folded position, the locking member 2520 locks the connecting assembly 2510. When the operating member 2400 is operated, the locking member 2520 switches from the lock position to the unlock position, the locking member 2520 unlocks the connecting assembly 2510, and the connecting assembly 2510 automatically ejects from the folded position to the unfolded position under the action of an elastic reset member. In a case that the connecting assembly 2510 is at the unfolded position and in a state of being locked with the connection head of the ISOFIX interface, when the operating member 2400 is operated, the connecting assembly 2510 automatically switches from the locked state to the unlocked state, thereby allowing the connecting assembly 2510 to be separated from the connection head. In a case that the connecting assembly 2510 is at the unfolded position and in an unlocked state, when the operating member 2400 is operated, the connecting assembly 2510 and the locking member 2520 do not respond. That is, the connecting assembly 2510 is held at the unfolded position and remains in the unlocked state.

The anchoring assembly 2500 further includes a first traction member 2530, a second traction member 2540, and a linkage member 2550. The operating member 2400 is connected to the first traction member 2530 and the second traction member 2540 through the linkage member 2550. One end of the first traction member 2530 is connected to the linkage member 2550, and the other end of the first traction member 2530 is connected to the locking member 2520. One end of the second traction member 2540 is connected to the linkage member 2550, and the other end of the second traction member 2540 passes through the locking member 2520 and is connected to the connecting assembly 2510. Both the first traction member 2530 and the second traction member 2540 may be, for example, bendable and deformable wires such as steel wires or carbon fiber wires.

The linkage member 2550 is pivotally connected to the base 2200 and movably connected to the operating member 2400. The operating member 2400 is movable between a drive position and an initial position. A movement direction of the operating member 2400 is substantially parallel to the longitudinal direction. "The operating member is operated" mentioned above means that the operating member 2400 is moved from the initial position to the drive position. During the movement of the operating member 2400 from the initial position to the drive position, the operating member 2400 drives the linkage member 2550 to pivot, and the pivoting of the linkage member 2550 in turn drives, through the first traction member 2530 and the second traction member 2540, the locking member 2520 and the connecting assembly 2510 to respond respectively.

Specifically, on the one hand, when the operating member 2400 is operated, the operating member 2400 drives the linkage member 2550 to pivot, and the linkage member 2550 drives, through the first traction member 2530, the locking member 2520 to move from the lock position to the unlock position. In particular, in a case that the connecting assembly 2510 is at the folded position, when the linkage member 2550 pivots to drive, through the first traction member 2530, the locking member 2520 to move to the unlock position, the locking member 2520 unlocks the connecting assembly 2510, and the connecting assembly 2510 automatically ejects to the unfolded position under the action of a resilient member. On the other hand, when the operating member 2400 is operated, the operating member 2400 drives the linkage member 2550 to pivot, and the linkage member 2550 drives, through the second traction member 2540, the connecting assembly 2510 to move from the locked state to the unlocked state. In particular, in a case that the connecting assembly 2510 is in the locked state, when the linkage member 2550 pivots to drive, through the second traction member 2540, the connecting assembly 2510 to switch to the unlocked state, the connecting assembly 2510 is unlocked from the connection head. In this process, the connecting assembly 2510 is held at the unfolded position. When the connecting assembly 2510 switches to the unlocked state, the second traction member 2540 is in a slack state. Therefore, even if the operating member 2400 is operated to drive the linkage member 2550 to pivot, the linkage member 2550 cannot drive the second traction member 2540 to move as a whole or can drive only the second traction member 2540 to move as a whole to a very small extent, so that the connecting assembly 2510 continues to remain in the unlocked state.

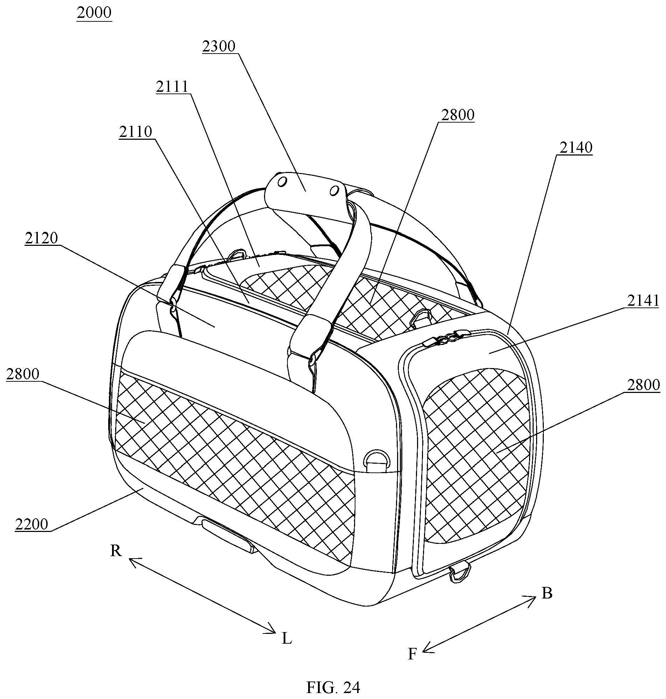

FIG. 24 illustrates a portable carrier according to still another embodiment of the present disclosure. In this embodiment, the handle 2300 is a double handle. In order to improve breathability of the accommodating space, in this embodiment, at least one of the top portion 2110, the front side portion 2120, the rear side portion 2130 (not shown in FIG. 24), the left side portion 2140, and the right side portion 2150 (not shown in FIG. 24) of the carrier body 2100 are provided with a window, a cover may be provided at the position of the window to open or close the window. When the window is opened, the pet may be placed into the carrier body 2100 or the pet may be taken out of the carrier body 2100. A venting region is formed in at least one of the top portion 2110, the front side portion 2120, the rear side portion 2130, the left side portion 2140, and the right side portion 2150 of the carrier body 2100. The venting region is covered with a breathable mesh 2800. FIG. 24 illustrates the breathable mesh 2800 arranged on the top portion 2110, the front side portion 2120, and the left side portion 2140, and illustrates a top cover 2111 arranged on the top portion 2110 and a left side cover 2141 arranged on the left side portion 2140. It may be understood that the breathable mesh 2800 may also be correspondingly arranged on the rear side portion 2130 and the right side portion 2150. It may also be understood that a cover may also be correspondingly arranged on the right side portion 2150. In other embodiments, cover bodies may also be correspondingly arranged on the front side portion 2120 and the rear side portion 2130. Referring to the top portion 2110 and the left side portion 2140 in FIG. 24, the breathable mesh 2800 may be formed on the cover bodies (the top cover 2111 and the left side cover 2141). That is, at least part of the cover bodies are provided with the breathable mesh 2800. Through the arrangement of the breathable mesh 2800, it is ensured that the accommodating space is in a closed state, and the breathability of the accommodating space is improved, thereby helping to improve an environment in which the pet in the accommodating space is located and improve comfort of the pet.

A third aspect of the present disclosure provides an improved portable carrier. As described above, the portable carrier includes, but is not limited to, a carrycot, a pet carrier, a pet carriage, a pet backpack, and other carriers suitable for carrying animals. The portable carrier provided in this aspect will be described below by taking a pet backpack as an example.

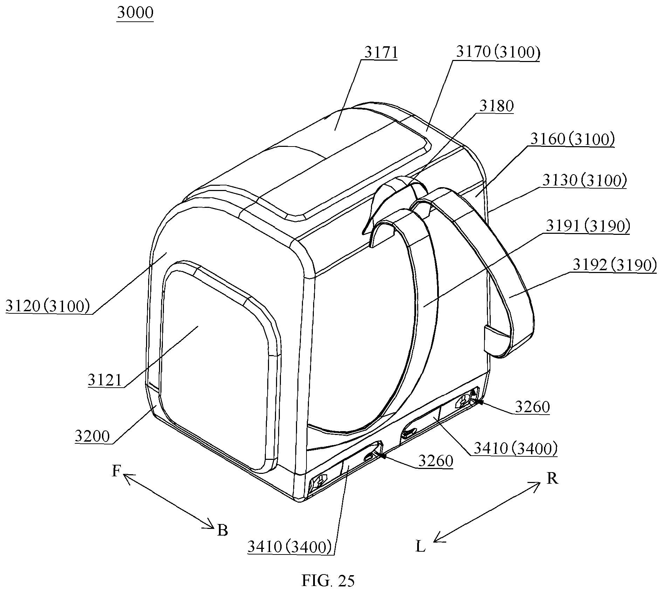

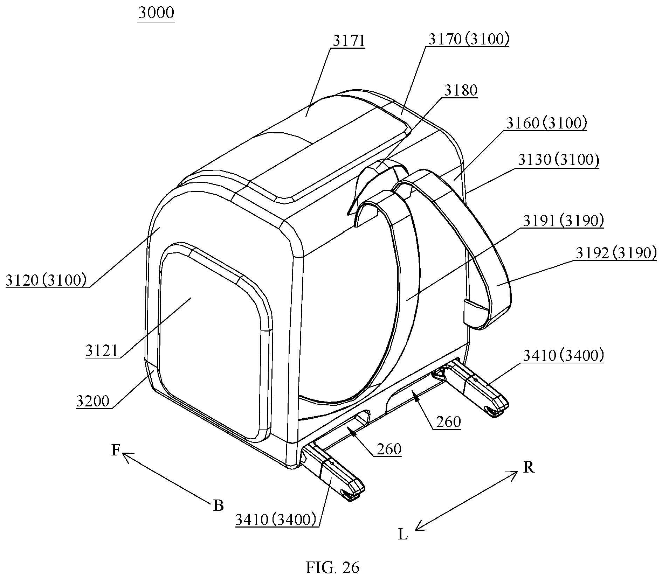

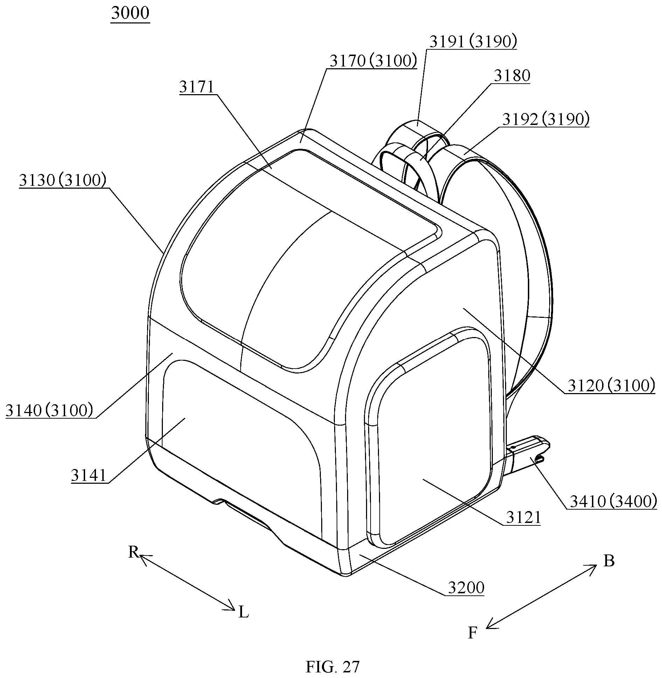

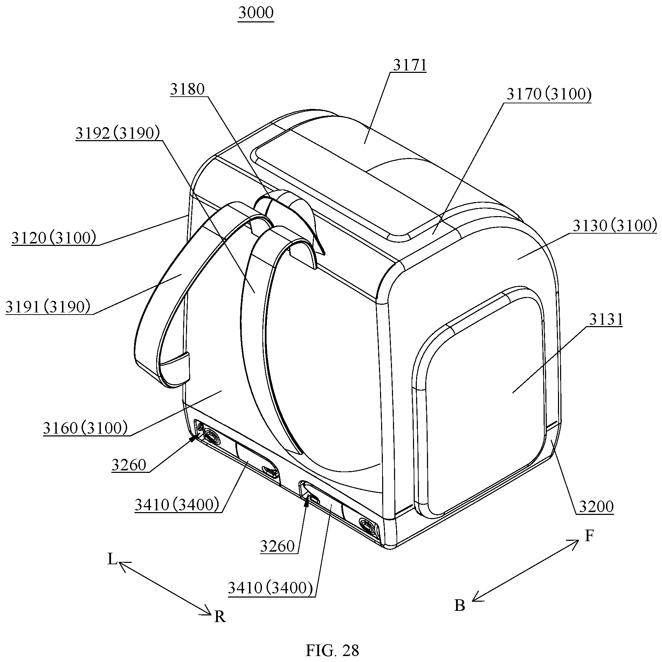

FIG. 25 to FIG. 29 illustrate a portable carrier 3000 according to an embodiment in the third aspect of the present disclosure. A connecting assembly 3410 of an anchoring assembly 3400 of the portable carrier 3000 in FIG. 25 and FIG. 28 is at a folded position, and the connecting assembly 3410 of the anchoring assembly 3400 of the portable carrier 3000 in FIG. 26, FIG. 27, and FIG. 29 is at an unfolded position.

The portable carrier 1000 has an accommodating space for accommodating an animal. The portable carrier 3000 may be carried around (such as taken or carried on a back), and may be secured to a seat of a transportation vehicle such as a train or a car. The portable carrier 3000 includes a carrier body 3100 and a base 3200. The carrier body 3100 is arranged above the base 3200. The carrier body 3100 and the base 3200 jointly form an accommodating space used to accommodate an animal. The base 3200 is made of, for example, a hard material to form a support for the carrier body 3100. The carrier body 3100 may include fabric sheets and other materials defining the accommodating space. The portable carrier 3000 is further provided with a shoulder belt assembly 3190. The shoulder belt assembly 3190 is arranged on the carrier body 3100, so that the pet can be easily carried, which is not carried by a hand especially in the case of traveling, hiking, or taking transportation vehicle. Compared with the portable carrier of the hand-held type, the shoulder belt assembly 3190 can disperse an overall weight of the portable carrier 3000 and the pet accommodated therein on the shoulders and the back, reducing fatigue in the case of long-term carrying. With the shoulder belt assembly 3190, the carrying of the pet is more stable, and the shaking of the pet in the accommodating space is reduced.

As shown in FIG. 25 to FIG. 29, the carrier body 3100 has a top portion 3170, a front side portion 3140, a left side portion 3120, a right side portion 3130, and a rear side portion 3160. The top portion 3170 forms a top wall of the accommodating space, the front side portion 3140 forms a front side wall of the accommodating space, the left side portion 3120 forms a left side wall of the accommodating space, the right side portion 3130 forms a right side wall of the accommodating space, and the rear side portion 3160 forms a rear side wall of the accommodating space. As shown in FIG. 25 and FIG. 26, the shoulder belt assembly 3190 is arranged on the rear side portion 3160 and includes a first shoulder belt 3191 and a second shoulder belt 3192. Upper ends of the first shoulder belt 3191 and the second shoulder belt 3192 are connected to positions where the rear side portion 3160 of the carrier body 3100 is close to the top portion 3170 or positions where the rear side portion 3160 and the top portion 3170 are connected. At such positions, the connection is relatively firm to ensure that the first shoulder belt 3191 and the second shoulder belt 3192 can bear the weight of the portable carrier 3000. Lower ends of the first shoulder belt 3191 and the second shoulder belt 3192 are connected to a lower side of the rear side portion 3160 or positions where the lower side of the rear side portion 3160 is connected to the left side portion 3120 and the right side portion 3130 respectively. As shown in FIG. 25, the lower end of the first shoulder belt 3191 is connected to the position where the lower side of the rear side portion 3160 is connected to the left side portion 3120, and the lower end of the second shoulder belt 3192 is connected to the position where the lower side of the rear side portion 3160 is connected to the right side portion 3130. In some embodiments, the two ends of the first shoulder belt 3191 and the second shoulder belt 3192 and the positions at the connections may be fixed, which may alternatively be connected to the carrier body 3100 through a metal buckle or a plastic buckle, allowing lengths of the first shoulder belt 3191 and the second shoulder belt 3192 to be adjusted. The first shoulder belt 3191 and the second shoulder belt 3192 are symmetrically arranged on two sides of the rear side portion 3160 and are arranged diagonally downwards from an upper part to a lower part of the carrier body 3100, so that the portable carrier 3000 can distribute the weight evenly, reducing a burden on the shoulders.

In some embodiments, the first shoulder belt 3191 and the second shoulder belt 3192 may be fastened to the top portion 3170 and the rear side portion 3160 by sewing. In some embodiments, the first shoulder belt 3191 and the second shoulder belt 3192 may be double-stitched, that is, two parallel stitches are used to secure the shoulder belts, thereby better dispersing pressure and preventing breakage of the stitches. In some embodiments, the positions where the first shoulder belt 3191 and the second shoulder belt 3192 are connected to the top portion 3170 and the rear side portion 3160 may be sewn using multiple layers of fabrics, to improve structural firmness. Such fabrics may be reinforced canvas, nylon, or leather, thereby providing extra support and durability. In some embodiments, the first shoulder belt 3191 and the second shoulder belt 3192 may be fastened to the top portion 3170 and the rear side portion 3160 by riveting, thereby being suitable for bearing a large weight and pressure, having good corrosion resistance, being suitable for outdoor use, and enhancing the appearance of the portable carrier 3000.

In some embodiments, the shoulder belt assembly 3190 may have only a shoulder belt, that is, a single shoulder belt. In a case that a single shoulder belt is used, the portable carrier 3000 may be carried in a crossbody manner, so that it can be quickly taken away. In some embodiments, the shoulder belt assembly 3190 may have more than two shoulder belts. In a case that a plurality of shoulder belts are used, the carrying manner of the portable carrier 3000 is adjusted according to a requirement.

In some embodiments, either the first shoulder belt 3191 or the second shoulder belt 3192 is provided with a soft cushion on an inner side, to improve comfort and reduce pressure on the shoulders. The soft cushions may be filled with foam. The soft cushions are provided over the entire length of the first shoulder belt 3191 and the second shoulder belt 3192 to provide even support and comfort. Alternatively, the soft cushions are provided only in middle parts of the first shoulder belt 3191 and the second shoulder belt 3192 (i.e., parts in direct contact with the shoulders), which can reduce the weight of the material and also provide support in specific regions. Thicknesses of the soft cushions may be set according to a requirement, adapting to different load-bearing requirements. The soft cushions may be directly arranged in the first shoulder belt 3191 and the second shoulder belt 3192 or be detachably arranged on the first shoulder belt 3191 and the second shoulder belt 3192, so as to be mounted or removed according to a requirement. A breathable material, such as mesh fabrics, may be used on an outer layer of the soft cushion, to increase air circulation and reduce sweating and discomfort during long-term use.

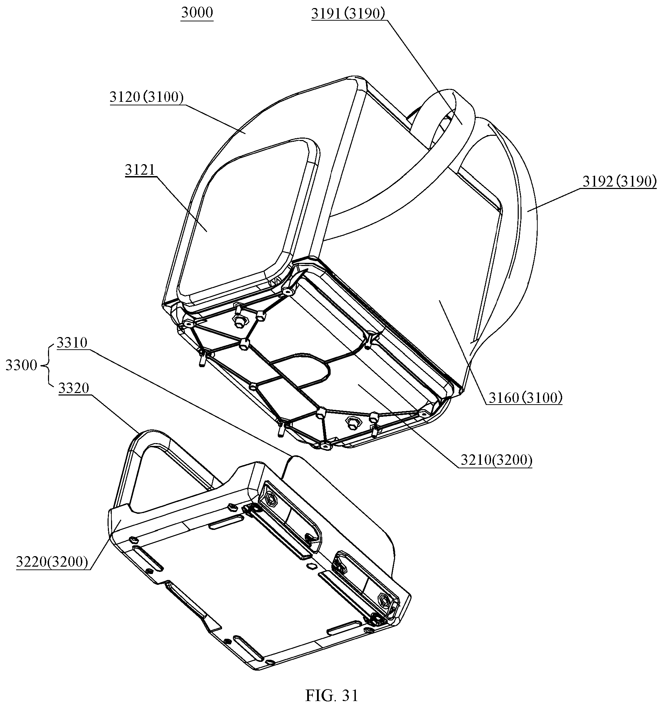

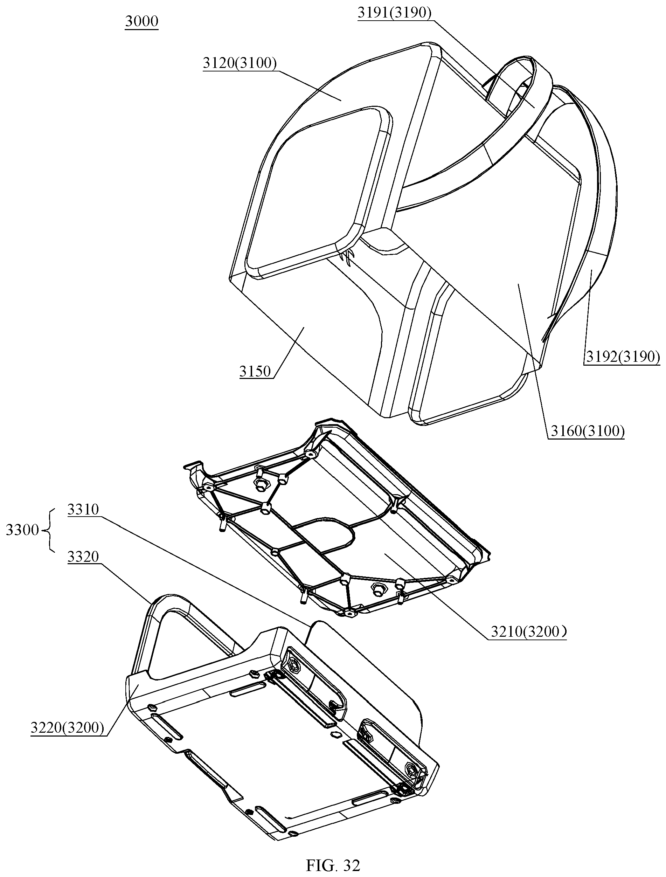

In some embodiments, a bottom wall of the accommodating space is formed by the base 3200, and the front side portion 3140, the left side portion 3120, the right side portion 3130, and the rear side portion 3160 are connected to the base 3200 respectively. In some embodiments, as shown in FIG. 31 and FIG. 32, the carrier body 3100 has a bottom portion 3150. The bottom portion 3150 is fixed in the base 3200 to ensure that the connection between the carrier body 3100 and the base 3200 is tight and not easy to loosen.

In some embodiments, as shown in FIG. 31 and FIG. 32, the bottom portion 3150 forms the bottom wall of the accommodating space 110. In some embodiments, a first cover 3210 and a second cover 3220 are located on two sides of the bottom portion 3150 of the carrier body 3100 respectively. The first cover 3210 is located on a side of the bottom portion 3150 of the carrier body 3100 facing the accommodating space. The second cover 3220 is located on a side of the bottom portion 3150 of the carrier body 3100 facing away from the accommodating space. In other words, the first cover 3210 is located in the accommodating space, and the second cover 3220 is located outside the accommodating space. In some embodiments, the first cover 3210 and the second cover 3220 are respectively provided with a limiting portion and a positioning portion. Through coordination between the limiting portion and the positioning portion, the bottom portion 3150 of the carrier body 3100 may be clamped between the first cover 3210 and the second cover 3220, so that the carrier body 3100 and the base 3200 can be positioned. After the first cover 3210 is engaged with the second cover 3220, the first cover 3210 is regarded as the bottom wall of the accommodating space to support the pet.

In some embodiments, the left side portion 3120, the right side portion 3130, the front side portion 3140, the rear side portion 3160, the top portion 3170, and the bottom portion 3150 may all be made of soft materials (such as fabrics) and connected together by sewing. The fabrics may be made of nylon, polyester, canvas, or the like, which has advantages such as durability, lightness, and waterproofness.

In some embodiments, in order to make the appearance of the portable carrier 3000 more upright, ethylene vinyl acetate (EVA) or EPP may be foamed into sheets, which are attached to the fabrics, then baked and pressed into shape, and finally sewn or connected by zipping. The carrier body 3100 of the portable carrier 3000 is supported by EVA or EPP materials to maintain an upright shape, is not easily deformed, and has a more beautiful appearance. EVA is soft, elastic, and has good cushioning properties and impact resistance, and EPP has excellent impact resistance and durability.

In some embodiments, the left side portion 3120, the right side portion 3130, the front side portion 3140, the rear side portion 3160, the top portion 3170, and the bottom portion 3150 may all be made of thermoplastic polyurethane (TPU), polyester, polymer composite materials, waterproof nylon, or coated nylon, and are connected together through seamless bonding, thereby forming an integrated carrier body structure, which reduces existence of stitching holes, significantly improves waterproof performance, and reduces risks of wear and tear of the stitches. In some embodiments, during the seamless bonding, adhesive such as polyurethane adhesive, hot melt glue, epoxy resin glue, acrylic adhesive, or silicone adhesive is used to provide a very reliable bonding effect and avoid falling off.

In some embodiments, the carrier body 3100 may be integrally printed by 3D printing. Alternatively, the left side portion 3120, the right side portion 3130, the front side portion 3140, the rear side portion 3160, the top portion 3170, and the bottom portion 3150 may be printed by 3D printing respectively, and then assembled into the carrier body 3100 by bonding, welding, plugging, or the like.

As shown in FIG. 25 to FIG. 29, at least one window is provided on the carrier body 3100. That is, a window is provided on one or more of the left side portion 3120, the right side portion 3130, the front side portion 3140, the rear side portion 3160, and the top portion 3170, and the window is covered with a window body. In some embodiments, a window is provided on the right side portion 3130, and a right side window body 3131 is provided on the window. A window is provided on the left side portion 3120, and a left side window body 3121 is provided on the window. A window is provided on the top portion 3170, and a top portion window body 3171 is provided on the window. A window is provided on the front side portion 3140, and a front side window body 3141 is provided on the window. The window may be circular, rectangular, or in other shapes. In order to prevent an edge of the window from being worn or damaged, the edge of the window is reinforced. For example, the edge of the window may be protected by using a reinforcing strip, hemming-stitch, or a hot pressing technology. Each window body is made of a breathable mesh, such as nylon mesh, polyester mesh, or other durable mesh materials, to meet the requirement for breathability. The window body may be designed to be transparent or translucent, such as using transparent or translucent meshes, to facilitate light transmission and breathability and also ensure the comfort of the pet inside. As a result, a function of ventilation or visible window is provided through the arrangement of the window and the window body.

In some embodiments, the front side window body 3141 may be fastened to an edge of the window of the front side portion 3140 by sewing, bonding, or hot pressing. The top portion window body 3171 may be connected to the top portion 3170 by zipping, and/or the left side window body 3121 may be connected to the left side portion 3120 by zipping, and/or the right side window body 3131 may be connected to the right side portion 3130 by zipping, to realize opening and closing of the corresponding window, thereby facilitating entry and exit of the pet. In some embodiments, each window body may be provided with a waterproof coating or a waterproof zipper, which can effectively prevent entry of water into the accommodating space and also maintain a ventilation effect. In some embodiments, each window body may be provided as a multi-layer structure, with a breathable mesh on an inner layer and a detachable windproof and waterproof cover on an outer layer.

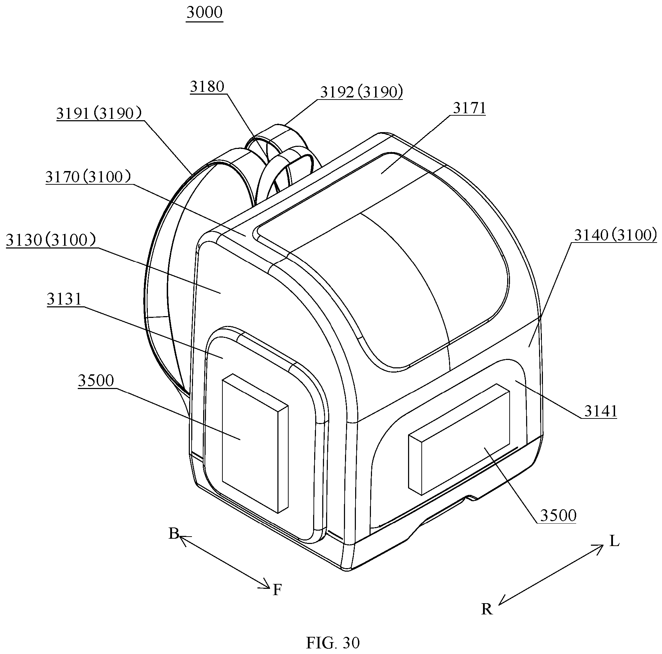

As shown in FIG. 30, a cushioning body 3500 for impact protection is arranged at the at least one window. The cushioning body 3500 can improve lateral impact protection safety. In some embodiments, the cushioning body 3500 may be made of an EVA foam material, so that the cushioning body 3500 has good softness and cushioning properties, and is suitable for lateral collision protection. Elasticity and pressure resistance of the EVA foam material can effectively absorb energy during the collision and reduce damage to the portable carrier 3000 and the pet therein. In some embodiments, the cushioning body 3500 may be made of an EPP material, so that the cushioning body 3500 has high toughness and excellent impact resistance. The EPP material can quickly return to its original shape after being impacted, making it suitable to serve as a core material for lateral collision protection, especially for applications that require long-term use and continuous protection after multiple impacts. In some embodiments, the cushioning body 3500 may be made of a TPU material, so that the cushioning body 3500 has extremely high wear resistance, impact resistance, and elasticity. The TPU material is suitable for lateral collision protection at higher protection levels. The TPU material can maintain flexibility in low-temperature environments and is suitable for outdoor use.

In some embodiments, through an injection molding or hot pressing process, the cushioning body 3500 may be directly integrated with the corresponding window body. The integrated structure of the cushioning body and the window body not only ensures the strength of the structure, but also reduces splicing points, so as to avoid weak points or vulnerable parts during a lateral collision. The integrally formed cushioning body 3500 has a stable structure, is strong and reliable, and can effectively resist an external impact. Meanwhile, since the cushioning body 3500 is integrated with the window body, the appearance is simpler, and waterproof and dustproof performance is also improved.

In some embodiments, the cushioning body 3500 may be flexibly mounted to and removed from the corresponding window body by using a detachable connection such as Velcro, a zipper, or a buckle. The Velcro or zipper facilitates quick mounting and replacement, while the buckle provides a firmer way to secure. The detachable connection by using Velcro is convenient for daily use, and the user can freely mount and remove the cushioning body 3500 according to a requirement, especially when high-strength protection is not required, which facilitates maintenance. According to the detachable connection by using the zipper, the cushioning body 3500 can be easily removed or replaced when needed, which is especially suitable when the cushioning body 3500 is required to be cleaned or replaced. The detachable connection by using the buckle is suitable for requirements for high fixation strength and safety, which prevents loosening or falling off of the cushioning body 3500 due to an external force.

In some embodiments, the cushioning body 3500 may be designed to have a double-layer structure, with an inner layer which is basic protective structure permanently fastened to the window body, and an outer layer which is detachably connected. This design combines robustness and flexibility, so when the outer layer is damaged or needs to be upgraded, it can be easily replaced without changing the overall structure.

In some embodiments, the cushioning body 3500 may be arc-shaped, square, rectangular, honeycomb-shaped, or in other shapes. The arc-shaped cushioning body 3500 may better fit a curved surface of the portable carrier 3000 and disperse an impact force during a collision. The arc-shaped cushioning body 3500 can effectively guide distribution of an external force when the collision occurs, reducing a direct impact on the portable carrier 3000 and the pet inside the portable carrier 3000. The square or rectangular cushioning body 3500 may cover a larger surface area and provide better protection. Meanwhile, the square or rectangular cushioning body 3500 is more stable and can evenly disperse the impact force. The honeycomb-shaped cushioning body 3500 may provide a lighter weight and can effectively absorb impact energy. The honeycomb-shaped cushioning body 3500 is conducive to reducing the overall weight of the portable carrier 3000 on the premise of ensuring strength.

In some embodiments, the cushioning body 3500 may be smaller than a size of the corresponding window body. When the cushioning body 3500 is smaller than the window body, the cushioning body 3500 covers only a central region of the window body. The shape of the cushioning body 3500 may be consistent with that of the window body. When the cushioning body 3500 is smaller than the window body, the overall weight of the portable carrier 3000 can be reduced, because the cushioning body 3500 covers a smaller region and uses fewer materials. This is very beneficial for portability and a lightweight design. In addition, the cushioning body 3500 is smaller than the window body, so that an edge region of the window body can still play light transmission and breathable functions normally, which is especially suitable for use when protection does not require full coverage. For example, the edge of the window body made of the breathable mesh can still be ventilated, and the central region can be additionally protected.

In some embodiments, the size of the cushioning body 3500 may be larger than the size of the window body, so that the cushioning body 3500 covers the entire window body and also extends outside the window body to cover part of a material region around the window body. The cushioning body 3500 larger than the window body can better protect the window body and structures therearound, and can absorb and disperse the impact force especially in the case of a strong lateral collision force. This cushioning body 3500 is more effective in lateral collision protection of the portable carrier 3000, which can protect the window body and can also reduce stress on surrounding materials. Since the cushioning body 3500 extends beyond the window body, the cushioning body 3500 can provide additional support for a connection structure around the window body, thereby enhancing stability and rigidity of the entire portable carrier 3000. This dimensional relationship is particularly useful for designs that require reinforced structural strength of the portable carrier 3000.

In some embodiments, the size of the cushioning body 3500 may be completely consistent with the size of the window body. The cushioning body 3500 covers the entire area of the window body but does not exceed or shrink. The cushioning body 3500 seamlessly fits the edge of the window body and is typically designed to have a same shape as the window body. The cushioning body 3500 having a same size as the window body can maintain the overall simple appearance of the portable carrier 3000 while providing comprehensive protection. No matter which part of the window is impacted, the cushioning body 3500 can effectively absorb and disperse the impact force to prevent damage. The cushioning body 3500 having a same size as the window body provides a balanced solution that can protect all parts of the window body without making the cushioning body 3500 appear too prominent, ensuring that the portable carrier 3000 strikes a balance between protection and beauty.

In some embodiments, the cushioning body 3500 may be detachably connected to the window body or be detachably connected to a carrier body structure other than the window body. Since the carrier body structure other than the window body has higher strength than the window body, connection strength between the carrier body and the cushioning body 3500 can be improved to improve an impact protection protection effect on the window body. In order to ensure smooth transition between the cushioning body 3500 and the window body, a thickness of the cushioning body 3500 should be close to a thickness of the window body. This ensures that the design looks consistent, which neither causes a bulky appearance due to an excessively large thickness nor affects the protective effect due to an excessively small thickness. In some embodiments, the window body may be very thin (such as the breathable mesh), while the cushioning body 3500 may be designed to be slightly thicker to improve impact protection performance. In this case, the cushioning body 3500 may protrude from the surface of the window body to form a cushioning region to reduce a direct effect of impact on the window body.

In some embodiments, as shown in FIG. 30, cushioning bodies 3500 are respectively arranged at the window body of the right side portion 3130 and the window body of the front side portion 3140.

In some embodiments, as shown in FIG. 25 to FIG. 27, the portable carrier 3000 is provided with a handle 3180. The handle 3180 is arranged at the top portion 3170 of the carrier body 3100. The portable carrier 3000 can be conveniently taken through the handle 3180. The handle 3180 may be fastened to the top portion 3170 by sewing.

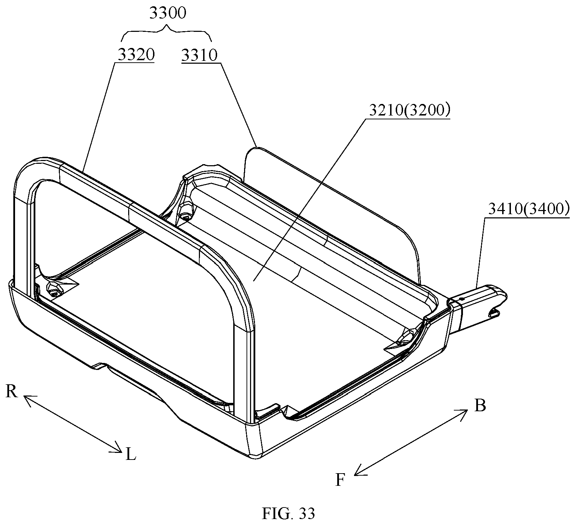

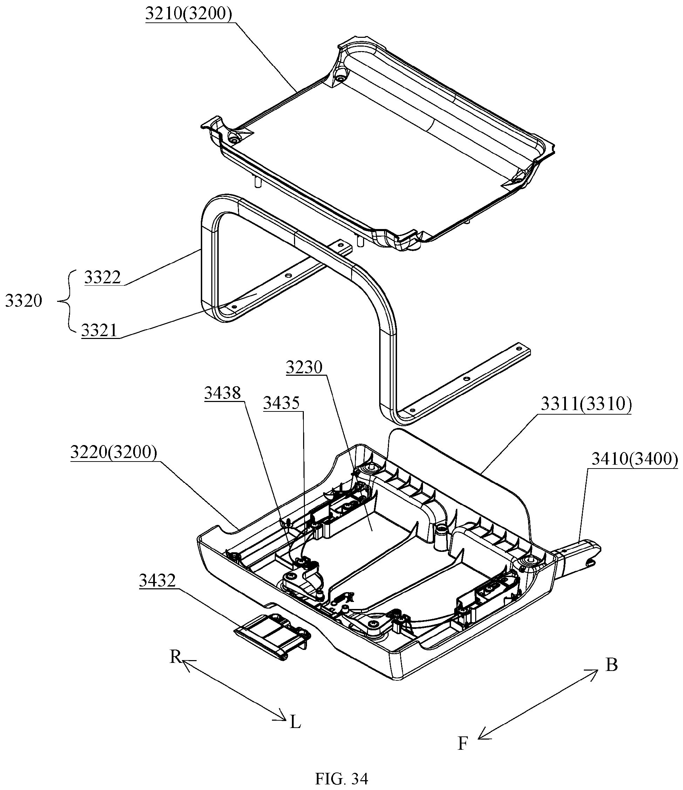

As shown in FIG. 33 to FIG. 35, in some embodiments, the base 3200 includes a first cover 3210 and a second cover 3220, and the first cover 3210 and the second cover 3220 may be detachably connected through a fastener. The fastener may be, for example, a screw, a bolt, or the like. In some embodiments, the first cover 3210 and the second cover 3220 may alternatively be detachably connected by, for example, a snap connection. As shown in FIG. 34, in some embodiments, the first cover 3210 and the second cover 3220 jointly form a receiving space 3230. A part of the reinforcing member 3300 extends into the receiving space 3230 and is connected to the base 3200. In this way, the bottom wall of the accommodating space can be made relatively smooth and flat to prevent interference of the reinforcing member 3300 with the object carried in the accommodating space, thereby improving comfort of the accommodating space.

In some embodiments, the receiving space 3230 is a groove recessed in a lower surface of the base 3200. The part of the reinforcing member 3300 extending into the receiving space 3230 can be completely received in the receiving space 3230 without protruding from the lower surface of the base 3200, so that the base 3200 can be placed more stably on the seat of the transportation vehicle or the ground. In some embodiments, the base 3200 may have a single-layer structure or a multi-layer structure.

As shown in FIG. 33 to FIG. 35, in some embodiments, the reinforcing member 3300 is arranged at least on the front side portion 3140 and the rear side portion 3160 of the carrier body 3100. In some embodiments, internal interlayers are respectively arranged in the front side portion 3140 and the rear side portion 3160 to place the reinforcing member 3300. The interlayers may be formed from an inner lining and an outer layer material of the front side portion 3140 and the rear side portion 3160 respectively. The inner lining and the outer layer material are connected by sewing, bonding, or hot pressing to form a sandwich space. The reinforcing member 3300 is fully wrapped and fixedly sandwiched between the inner lining and the outer layer material, which can provide support without being visible from the outside. This ensures that an external surface of the portable carrier 3000 remains flat and smooth, with no hard parts protruding to affect the appearance or user experience, and meanwhile, structural stability and comfort of use of the portable carrier 3000 are improved. The reinforcing member 3300 includes a first reinforcing member 3310 and a second reinforcing member 3320. As shown in FIG. 33 to FIG. 35, the first reinforcing member 3310 is arranged on the rear side portion 3160 of the carrier body 3100. Referring to FIG. 25 and FIG. 26, the shoulder belt assembly 3190 is arranged on the rear side portion 3160. That is, the first reinforcing member 3310 is arranged on a same side of the carrier body as the shoulder belt assembly 3190 to support the user's back when the user carries the portable carrier 3000 on the shoulder. As shown in FIG. 33 to FIG. 35, the second reinforcing member 3320 is arranged on the front side portion 3140 of the carrier body 3100. That is, the second reinforcing member 3320 is arranged on a side of the carrier body opposite to the shoulder belt assembly 3190. In the embodiments of the third aspect, the first reinforcing member 3310 can function as a support function, and therefore, the "first reinforcing member" may also be referred to as an "support component". And the second stiffener 3320 can function as an impact protection function, and therefore, the "second reinforcing member" may also be referred to as an "impact protection component".

In some embodiments, referring to FIG. 33 and FIG. 34, the first reinforcing member 3310 includes a support plate 3311 which can be integrally molded with the base 3200 by injection molding, or is a separate component, such as a PE board or a corrugated board, which is fastened to the rear side portion 3160 by sewing. With this support plate 3311, a support effect of the rear side portion 3160 on a human body's back can be enhanced, a force applied when the portable carrier 3000 is carried on the shoulder can be reduced, and comfort when the portable carrier 3000 is carried on the shoulder can be improved. By adding the support plate 3311 to the rear side portion 3160, deformation or collapse of the portable carrier 3000 when a heavy object is carried can be prevented, thereby maintaining the shape and the function of the portable carrier 3000. The support plate 3311 can effectively disperse the weight of the portable carrier 3000 and evenly distribute the pressure on the entire back instead of concentrating it on a certain point. This can reduce the pressure on the shoulders and the back and improve comfort of long-term shoulder carrying. When the support plate 3311 is integrally molded with the base 3200 by injection molding, the entire structure is stronger and provides uniform support. As a result, the overall weight of the backpack can be reduced since additional fasteners are not required, and meanwhile, durability and waterproof performance of the portable carrier 3000 are enhanced. When the support plate 3311 serves as a separate component (such as a PE board or a corrugated board), the support plate 3311 is fastened to the rear side portion 3160 by sewing. Therefore, the material and the thickness of the support plate 3311 can be selected more flexibly to adapt to different usage requirements. When the PE board is used, the support plate 3311 has excellent strength and elasticity, and can maintain a certain degree of flexibility while providing support. When the corrugated board is used, the support plate 3311 has a light structure and high strength, and is suitable for providing sufficient support while keeping the portable carrier 3000 lightweight. The corrugated board can also create a ventilation channel in the rear side portion 3160 to improve breathability of the back.

In some embodiments, the support plate 3311 may be designed into a curved shape according to a natural curve of the human body's back to better fit the user's back and provide uniform support and comfortable experience. The support plate 3311 may be designed as an adjustable structure, and the user may adjust a position or an angle of the support plate 3311 according to his/her back shape and requirement for comfort. A shock-absorbing material or structure, such as an elastic cushion or air bag, may be added to the support plate 3311 to provide both support and shock-absorbing functions. This can further reduce the impact of long-term load bearing on the back and improve shoulder carrying experience. A ventilation slot or opening is provided on the support plate 3311, which can effectively promote air circulation, reduce back sweating, and improve breathability.

Referring to FIG. 33 to FIG. 35, the second reinforcing member 3320 includes a reinforcing portion 3322 and a connection portion 3321. The connection portion 3321 is connected to an end portion of the reinforcing portion 3322 and is connected to the base 3200. The reinforcing portion 3322 is supported on the front side portion 3140 of the carrier body 3100. The reinforcing portion 3322 and the connection portion 3321 are substantially perpendicular to each other. In some embodiments, the connection portion 3321 is located between the first cover 3210 and the second cover 3220. The connection portion 3321 is fastened to the bottom of the first cover 3210 through a fastener, so the connection portion 3321 is secured. In addition, the connection portion 3321 is also located in the receiving space 3230. The connection portion 3321 is arranged in the receiving space 3230, which protects the connection portion 3321 from external influences and provides effective protection and fixing, and can also further enhance the connection strength between the connection portion 3321 and the base 3200. Therefore, an external impact can be blocked, and loosening or damage caused by long-term use can be prevented. By arranging the connection portion 3321 in the receiving space 3230, an influence on structural strength due to loosening or displacement of the connection portion 3321 is prevented. Meanwhile, the first cover 3210 and the second cover 3220 are provided with additional support and protection to further improve the stability of the overall connection. In some embodiments, the fastener may be a screw, a bolt, a rivet, or the like, and an appropriate type is selected according to a requirement for strength between the connection portion 3321 and the first cover 3210. The screw is configured for detachable mounting, while the rivet is suitable for permanently fixed structures. During assembly, the connection portion 3321 is first placed on the bottom portion of the first cover 3210, and the fastener passes through the connection portion 3321 and fasten the connection portion 3321 to the bottom portion of the first cover 3210, so that the connection portion 3321 is firmly attached to the first cover 3210. In some embodiments, the connection portion 3321 extends substantially in the front-rear direction. The reinforcing portion 3322 extends substantially in a direction parallel to the front side portion 3140. That is, the reinforcing portion 3322 extends substantially in the up-down direction. In other words, the reinforcing portion 3322 extends from the base 3200 to the top portion 3170 of the carrier body 3 100. Since the carrier body 3100 is made of a soft fabric, support strength of the carrier body 3100 is relatively low. When the portable carrier 3000 is subjected to an external impact, the carrier body 3100 is easily deformed, thereby causing damage to an object (e.g., an animal) carried in the portable carrier 3000. In some embodiments, by arranging the reinforcing portion 3322 on at least the front side portion 3140 of the carrier body 3100, the reinforcing portion 3322 can be more effectively utilized to cushion most of an impact force, so as to limit deformation of the carrier body 3100, thereby reducing damage possibly caused by an external impact force to the object carried in the portable carrier 3000. In some embodiments, the second reinforcing member 3320 may alternatively be arranged on at least one of the left side portion 3120 and the right side portion 3130 of the carrier body 3100 to further enhance impact resistance of the carrier body 3100.

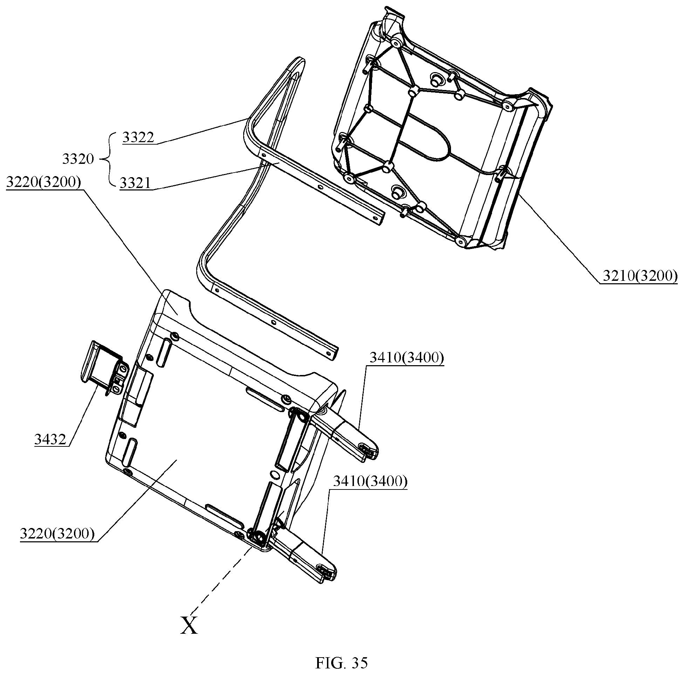

Referring to FIG. 34 and FIG. 35, the second reinforcing member 3320 is an integrally formed component, but is not limited thereto. In some embodiments, the second reinforcing member 3320 is integrally formed, and the connection portion 3321 is integrally formed on the reinforcing portion 3322. In some embodiments, the second reinforcing member 3320 is made of a hard material, such as hard alloy (such as stainless steel or aluminum alloy) or plastic. In some embodiments, the second reinforcing member 3320 is formed by bending a hard pipe. In some embodiments, the second reinforcing member 3320 may be a non-integrally formed component. Exemplarily, the reinforcing portion 3322 is welded by a plurality of parts, and the connection portion 3321 is fixedly connected to the reinforcing portion 3322, or is detachably connected to the reinforcing portion 3322, or is at least one part integrally formed on the reinforcing portion 3322.

Still referring to FIG. 34 and FIG. 35, in some embodiments, the reinforcing portion 3322 is in an inverted U shape, but the shape of the reinforcing portion 3322 is not limited thereto. An opening of the reinforcing portion 3322 in the inverted U shape faces the base 3200. Two connection portions 3321 are provided. The two connection portions 3321 are respectively connected to two ends of the reinforcing portion 3322 in the inverted U shape. In some embodiments, the reinforcing portion 3322 is, in a shape of, for example, inverted V, M, rectangle, or the like.

As shown in FIG. 25 to FIG. 29, in some embodiments, the anchoring assembly 3400 includes a connecting assembly 3410 and a locking mechanism 3430. The connecting assembly 3410 is configured to be connected to the connection head (not shown) of the seat of the transportation vehicle. In particular, the connecting assembly 3410 is adapted to be connected to an ISOFIX interface, and in this case the "connecting assembly" may also be referred to as the "ISOFIX connector". The connecting assembly 3410 has the following different states: a locked state where it can be locked with the connection head (e.g., the ISOFIX interface) of the seat of the transportation vehicle when the portable carrier 3000 is to be fixedly placed, and an unlocked state where it can be separated from the connection head when the portable carrier 3000 is to be carried on the shoulder. When not locked with the connection head, the connecting assembly 3410 remains in the unlocked state. During the locking of the connecting assembly 3410 with the connection head, the connecting assembly 3410 is driven by the connection head to switch to the locked state. The connecting assembly 3410 is movably connected to the base 3200 to be switchable between an unfolded position (which may also be referred to as "use position") and a folded position. When the connecting assembly 3410 is at the folded position, the connecting assembly 3410 is in the unlocked state.

As shown in FIG. 25 and FIG. 26, the locking mechanism 3430 is connected to the connecting assembly 3410, the connecting assembly 3410 has a first lock position and a second lock position, and the locking mechanism 3430 is adapted to cooperate with different lock positions to lock the connecting assembly 3410 at one of the folded position and the unfolded position. When the locking mechanism 3430 cooperates with the first lock position, the connecting assembly 3410 is locked at the folded position. When the locking mechanism 3430 cooperates with the second lock position, the connecting assembly 3410 is locked at the unfolded position.

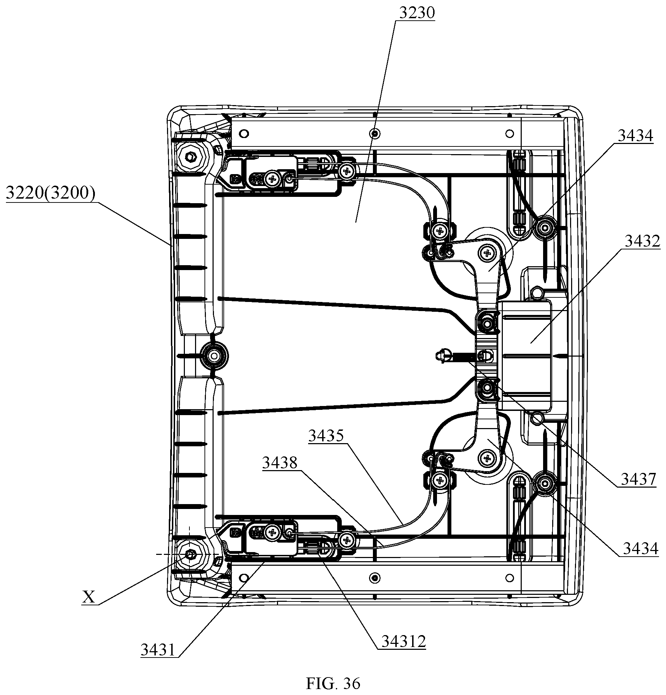

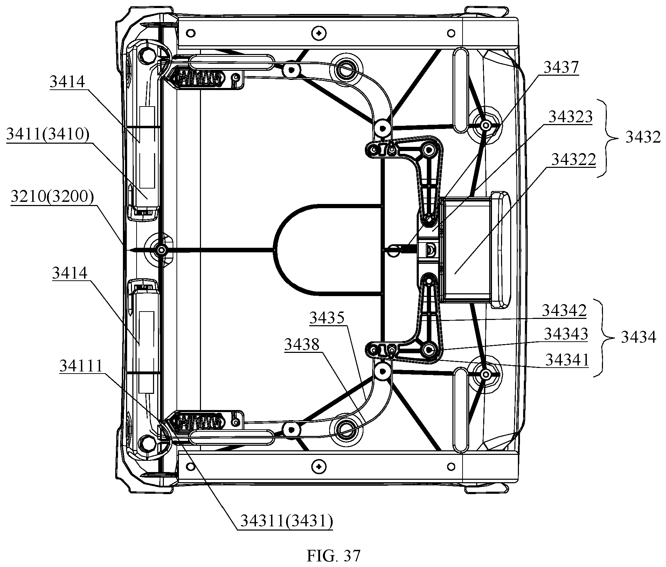

At least one connecting assembly 3410 is provided. The locking mechanism 3430 is connected to each connecting assembly 3410. As shown in FIG. 25 and FIG. 26 together with FIG. 36 and FIG. 37, the base 3200 is provided with at least one folding space 3260. When the at least one connecting assembly 3410 is at the folded position (i.e., when an anchoring assembly 3400 is in a folded state), the at least one connecting assembly 3410 is received in the at least one folding space 3260. When the at least one connecting assembly 3410 is at the unfolded position (i.e., when the anchoring assembly 3400 is in an unfolded state (which may also be referred to as "use state")), the at least one connecting assembly 3410 can extend out of the at least one folding space 3260 to be connected to the at least one connection head of the seat of the transportation vehicle. Specifically, when the connecting assembly 3410 is at the unfolded position, the connecting assembly 3410 extends from the same side of the carrier body 3100 as the shoulder strap assembly 3190. As shown in FIG. 25 and FIG. 26 together with FIG. 36 and FIG. 37, in some embodiments, the at least one folding space 3260 is formed in the second cover 3220. As a result, the connecting assembly 3410 is invisible in FIG. 36. In some embodiments, the base 3200 is provided with one folding space 3260, and the at least one connecting assembly 3410 is received in the folding space 3260. Alternatively, the base 3200 is provided with a plurality of folding spaces 3260, and each connecting assembly 3410 is arranged in the corresponding folding space 3260. The base 3200 is further provided with a through hole communicating with the receiving space 3230 and the at least one folding space 3260, thereby allowing at least part of the locking mechanism 3430 to pass through the through hole and cooperate with the connecting assembly 3410. The number of the through holes corresponds to that of the connecting assembly 3410.

As shown in FIG. 36 and FIG. 37, the at least one connecting assembly 3410 is pivotally connected to a rear portion of the base 3200, and the at least one folding space 3260 is arranged on the rear portion of the base 3200. In some embodiments, the locking mechanism 3430 includes a locking member 3431 and an operating member 3432. In order to facilitate user operation, the operating member 3432 may be arranged on the front portion of the base 3200. A part of the base 3200 away from the connecting assembly 3410 is the front portion of the base 3200. In this way, when the connecting assembly 3410 is connected to the seat of the transportation vehicle, it is convenient for the user to operate the operating member 3432 to unlock the connecting assembly 3410. In some embodiments, the front portion of the base 3200 forms a front side face of the base 3200, and the front side face of the base 3200 continuously transitions from an outer side face of the front side portion 3140 of the carrier body 3100. That is, the front side face of the base 3200 is at least partially flush with the outer side face of the front side portion 3140. The rear portion of the base 3200 forms a rear side face of the base 3200, and the rear side face of the base 3200 continuously transitions from an outer side face of the rear side portion 3160 of the carrier body 3100. That is, the rear side face of the base 3200 is at least partially flush with the outer side face of the rear side portion 3160.

Referring to FIG. 25 and FIG. 26, two connecting assemblies 3410 are provided, and the two connecting assemblies 3410 are respectively pivotally connected to the rear side face of the base 3200. Two folding spaces 3260 are provided. The two folding spaces 3260 are arranged at intervals in the left-right direction. In some embodiments, the folding space 3260 is a groove recessed in the rear side face of the base 3200, and the through hole is arranged through the bottom wall of the folding space 3260. When the two connecting assemblies 3410 are at a folded position, the two connecting assemblies 3410 are respectively stored in the corresponding folding spaces 3260. For example, an outer side face of the folded connecting assembly 3410 is flush with the outer side face of the base 3200.

In some embodiments, the anchoring assembly 3400 may include more than two connecting assemblies 3410, and more than two folding spaces 3260 are also correspondingly provided. The more than two connecting assemblies 3410 may be correspondingly connected to more than two connection heads on the seat of the transportation vehicle.

As shown in FIG. 25 to FIG. 26, the two connecting assemblies 3410 rotate in opposite directions to rotate from the folded position to the unfolded position, or from the unfolded position to the folded position. Rotation axes of the two connecting assemblies 3410 relative to the base 3200 are parallel to each other. In some embodiments, the two connecting assemblies 3410 may rotate in a same direction to switch to the unfolded position or the folded position.

As shown in FIG. 36, in some embodiments, the locking member 3431 is movably arranged on the base 3200 and has a lock position and an unlock position. The operating member 3432 is operably arranged on the base 3200 and is connected to the locking member 3431. When the operating member 3432 is operated if the connecting assembly 3410 is at different positions, the connecting assembly 3410 responds with different actions. In other words, when the operating member 3432 is operated, the connecting assembly 3410 responds differently corresponding to the fact that the connecting assembly 3410 is at different positions. In some embodiments, when the operating member 3432 is operated if the connecting assembly 3410 is at the folded position, the connecting assembly 3410 switches from the folded position to the unfolded position. That is, the operating member 3432 moves to cause the locking member 3431 to switch from the lock position to the unlock position, so that the locking member 3431 unlocks the connecting assembly 3410. In other words, when the operating member 3432 is operated, the connecting assembly 3410 switches from the folded position to the unfolded position corresponding to the fact that the connecting assembly 3410 is at the folded position. When the operating member 3432 is operated if the connecting assembly is at the unfolded position, the connecting assembly 3410 switches from the locked state to the unlocked state or remains in the unlocked state, and the connecting assembly is held at the unfolded position. In other words, when the operating member 3432 is operated, the connecting assembly 3410 switches from the locked state to the unlocked state or remains in the unlocked state corresponding to the fact that the connecting assembly 3410 is at the unfolded position.

As shown in FIG. 36, in some embodiments, the locking member 3431 is slidably arranged on the base 3200, and the locking member 3431 moves between the lock position and the unlock position relative to the base 3200. A movement direction of the locking member 3431 is approximately parallel to the front-rear direction. As shown in FIG. 35 and FIG. 36, the connecting assembly 3410 rotates relative to the base 3200 about a rotation axis X.

As shown in FIG. 37, in some embodiments, the locking member 3431 is provided with a locking protrusion 34311, and the first lock position is a locking recess 34111 provided on the connecting assembly 3410. The locking protrusion 34311 is adapted to mate with the locking recess 34111. Specifically, the locking protrusion 34311 is adapted to pass through a through hole 204 and be locked with the locking recess 34111, so as to lock the connecting assembly 3410 at the folded position.

As shown in FIG. 36 and FIG. 37, in some embodiments, the locking mechanism 3430 further includes a linkage member 3434 and a first traction member 3435. The operating member 3432 is connected to the locking member 3431 through the linkage member 3434 and the first traction member 3435. In some embodiments, the operating member 3432 is connected to the locking member 3431 through another driving mechanism, or the operating member 3432 is directly connected to the locking member 3431.

Still referring to FIG. 36 and FIG. 37, the operating member 3432 is movably arranged on the front portion of the base 3200, and the linkage member 3434 is movably connected to the base 3200. The linkage member 3434 is movably connected to the operating member 3432 and is connected to the locking member 3431 through the first traction member 3435. The operating member 3432 drives the linkage member 3434 to move when moving relative to the base 3200. The linkage member 3434 drives, through the first traction member 3435, the locking member 3431 to switch from the lock position to the unlock position. In some embodiments, the linkage member 3434 is pivotally connected to the base 3200. When operated, the operating member 3432 drives the linkage member 3434 to rotate.

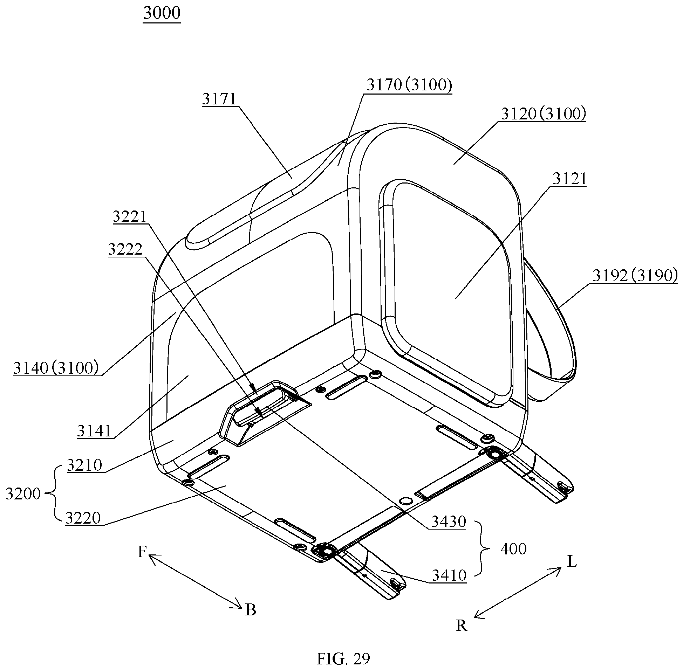

As shown in FIG. 29, FIG. 34, FIG. 36, and FIG. 37, the operating member 3432 is movable between a drive position and an initial position. A movement direction of the operating member 3432 is substantially parallel to the front-rear direction. During the movement of the operating member 3432 from the initial position to the drive position, the operating member drives the linkage member 3434 to pivot, and the linkage member 3434 drives, through the first traction member 3435, the locking member 3431 to move from the lock position to the unlock position. In some embodiments, the front portion of the base 3200 is provided with an operating port 3221, and the operating port 3221 communicates with the receiving space 3230. In some embodiments, the second cover 3220 is provided with an operating recess 3222, and the operating port 3221 extends through a side wall of the operating recess 3222, so that the operating recess 3222 communicates with the receiving space 3230. The operating member 3432 is inserted at the operating port 3221. The operating member 3432 has an operating portion 34322 and an operating connection portion 34323. The operating connection portion 34323 is received in the receiving space 3230 and is movably connected to the linkage member 3434. The operating portion 34322 is received in the operating recess 3222. The operating portion 34322 protrudes laterally. In this way, the operating portion 34322 can be limited in the operating recess 3222 by the contact between the side wall of the operating recess 3222 and the operating portion 34322, so as to avoid the operating portion 34322 from being contracted into the receiving space 3230, thereby facilitating the operating portion 34322 to be pulled forward.

As shown in FIG. 36 and FIG. 37, in some embodiments, the locking mechanism 3430 further includes a reset member 3437, one end of the reset member 3437 is connected to the operating member 3432, the other end of the reset member 3437 is connected to the base 3200. The reset member 3437 provides an elastic restoring force to the operating member 3432 to allow the operating member 3432 to return to the initial position when not being operated. In some embodiments, the reset member 3437 is, for example, a tension spring.

As shown in FIG. 36 and FIG. 37, the linkage member 3434 includes a connecting arm 34342, a traction arm 34341, and a pivot portion 34343 between the connecting arm 34342 and the traction arm 34341. The pivot portion 34343 is pivotally connected to the base 3200. The connecting arm 34342 is movably connected to the operating member 3432. The traction arm 34341 is connected to the first traction member 3435. An extension direction of the connecting arm 34342 is not parallel to an extension direction of the traction arm 34341. In some embodiments, the connecting arm 34342 is substantially perpendicular to the traction arm 34341, and the linkage member 3434 is substantially in a shape of "7". The linkage member 3434 may be, for example, an integrally formed component.

As shown in FIG. 36 and FIG. 37, in some embodiments, the first traction member 3435 is, for example, a bendable and deformable wire such as a steel wire or a carbon fiber wire.

Still referring to FIG. 36 and FIG. 37, in some embodiments, the locking mechanism 3430 further includes a second traction member 3438, and the connecting assembly 3410 is connected to the operating member 3432 through the second traction member 3438. In some embodiments, two ends of the second traction member 3438 are connected to the linkage member 3434 and the connecting assembly 3410 respectively, and the operating member 3432 is connected to the linkage member 3434. When the connecting assembly 3410 is in the locked state and at the unfolded position, the operating member 3432 can drive, through the second traction member 3438, the connecting assembly 3410 to switch from the locked state to the unlocked state. In some embodiments, when the connecting assembly 3410 is in the locked state, the operating member 3432 moves relative to the base 3200 to drive the linkage member 3434 to rotate, and the linkage member 3434 drives the second traction member 3438 to move as a whole, thereby switching the connecting assembly 3410 from the locked state to the unlocked state. When the connecting assembly 3410 switches to the unlocked state, the second traction member 3438 is in a slack state. As a result, even if the operating member 3432 moves relative to the base 3200 and drives the linkage member 3434 to rotate, the linkage member 3434 still cannot drive the second traction member 3438 to move as a whole or can drive only the second traction member 3438 to move as a whole to a very small extent, so that the connecting assembly 3410 continues to remain in the unlocked state. In other words, when the connecting assembly 3410 is in the unlocked state, even if the operating member 3432 is pulled, the connecting assembly 3410 cannot be switched between the unlocked state and the locked state through the second traction member 3438. In some embodiments, when the connecting assembly 3410 is in the unlocked state, if the connecting assembly 3410 is at the folded position, when the operating member 3432 is operated, the locking member 3431 can be driven by the first traction member 4351 to move to the unlock position, and the connecting assembly 3410 automatically rotates to the unfolded position under the action of a resilient member 440 and remains in the unlocked state. As shown in FIG. 36 and FIG. 37, the second traction member 3438 has an end connected to the linkage member 3434 and another end connected to the connecting assembly 3410. The second traction member 3438 may be, for example, a bendable and deformable wire such as a steel wire or a carbon fiber wire.

As shown in FIG. 37, in some embodiments, the connecting assembly 3410 includes a housing 3411 and an unlocking component 3414. The housing 3411 is movably arranged on the base 3200. The unlocking component 3414 is movably arranged in an inner cavity of the housing 3411. One end of the housing 3411 is pivotally connected to the rear portion of the base 3200 and is formed as a pivot end. A rotation axis of the housing 3411 is the rotation axis of the connecting assembly 3410. The other end of the housing 3411 serves as a free end, and the connecting assembly 3410 is folded and unfolded through rotation. As shown in FIG. 37, the unlocking component 3414 is connected to the second traction member 3438 to drive, through the second traction member 3438, the unlocking component 3414 to move or rotate.

In some embodiments, the unlocking component 3414 may be slidably arranged within the housing 3411 between a first position and a second position. When the two connecting assemblies 3410 are at the folded position, the two connecting assemblies 3410 are in the unlocked state, each connecting assembly 3410 is received in the corresponding folding space 3260, each locking member 3431 is located at a lock position where it is locked with the locking recess 34111 of the corresponding connecting assembly 3410, and each unlocking component 3414 is limited to the second position. When the unlocking component 3414 is at the second position, the second traction member 3438 is in a slack state. When the connecting assembly 3410 is required to be connected to the connection head (e.g., the ISOFIX interface arranged on the seat of the transportation vehicle), the connecting assembly 3410 is unfolded first. The operating member 3432 is pulled forward, the operating member 3432 drives two linkage members 3434 to rotate horizontally in opposite directions, and each linkage member 3434 drives, through the corresponding first traction member 4351, the corresponding locking member 3431 to move from the lock position to the unlock position, so that the connecting assembly 3410 ejects from the folded position to the unfolded position under the action of a resilient member (e.g., the tension spring). During the ejection of the connecting assembly 3410, the connecting assembly 3410 always remains in the unlocked state. Then, the connection head of the seat is connected to the connecting assembly 3410. With push of a clamping rod of the connection head, the unlocking component 3414 is moved from the second position to the first position under the action of an unlocking reset member. When the unlocking component 3414 is moved to the first position, the unlocking component 3414 is limited to the locked position.

When the connecting assembly 3410 is required to be folded, the connecting assembly 3410 is separated from the connection head first. The operating member 3432 is pulled forward, the operating member 3432 drives the two linkage members 3434 to rotate horizontally in opposite directions, and each linkage member 3434 drives, through the corresponding second traction member 3438, the corresponding unlocking component 3414 of the corresponding connecting assembly 3410 to move from the first position to the second position. In this process, the unlocking component 3414 automatically rotates from the lock position to the unlock position. When the unlocking component 3414 rotates to the unlock position (i.e., the connecting assembly 3410 and the connection head are unlocked and separated), the operating member 3432 is released, and the operating member 3432 automatically returns to the initial position under the action of the reset member 3437 and drives the linkage member 3434 to rotate in the opposite direction to be reset. In this case, the unlocking component 3414 is limited to the second position.

After the separation of the connecting assembly 3410 from the connection head is completed, the two connecting assemblies 3410 are respectively rotated in opposite directions toward the folded position, and the locking protrusion 34311 of the locking member 3431 is abutted by an outer side face of the housing 3411 (that is, an outer side face of an ISOFIX connecting assembly). When the connecting assembly 3410 is rotated to the folded position, the locking protrusion 34311 is no longer abutted by the outer side face of the housing 3411, the locking protrusion 34311 faces the locking recess 34111, and the locking member 3431 is moved to the lock position, so that the locking protrusion 34311 is locked with the locking recess 34111, thereby realizing locking of the connecting assembly 3410 at the folded position.

When the portable carrier 3000 is carried on the shoulder, the connecting assembly 3410 at a lower part of the rear side portion 3160 of the portable carrier 3000 is hidden and folded, which may neither interfere with the use of the portable carrier 3000 nor affect the normal position or function of the shoulder belt assembly 3190. The folding of the connecting assembly 3410 prevents contact with the body when the user carries the portable carrier 3000 on the shoulder, and ensures tight fit of the portable carrier 3000 with the human body, without causing any discomfort or movement obstruction. The first reinforcing member 3310 is located at the rear side portion 3160 of the portable carrier 3000 and directly adjacent to the user's back. The first reinforcing member 3310 provides overall support for the portable carrier 3000 when the user carries the portable carrier 3000 on the shoulder, so that the portable carrier 3000 fits the user's back and maintains a good shape. The second reinforcing member 3320 supports the front side portion 3140 and the bottom portion 3150 of the portable carrier 3000 to ensure that the portable carrier 3000 maintains the shape and does not deform or collapse when carrying a pet. The second reinforcing member 3320 helps to maintain the structure of the portable carrier 3000 during the shoulder carrying, making the pet more stable inside the portable carrier 3000 without affecting the balance of the shoulder carrying due to shift of a center of gravity of the portable carrier 3000. When the user needs to secure the portable carrier 3000 to the seat of the transportation vehicle (e.g., by using the ISOFIX interface), the operating member 3432 and the connecting assembly 3410 make this process easier and safer.

When the portable carrier 3000 is placed on the seat of the transportation vehicle, the user drives the connecting assembly 3410 to the unfolded position through the operating member 3432. The operating member 3432 is located on the front side portion 3140 of the portable carrier 3000. By pulling the operating member forward, the connecting assembly 3410 of the rear side portion 3160 of the portable carrier 3000 ejects from the hidden and folded state to the unfolded state. After being ejected, the connecting assembly 3410 is connected to the ISOFIX interface on the seat of the transportation vehicle. This process is similar to mounting a child seat to the seat of the transportation vehicle, ensuring that the portable carrier 3000 is stably secured in the vehicle to prevent movement during traveling. After being inserted into the ISOFIX interface, the connecting assembly 3410 may be automatically locked to ensure that the portable carrier 3000 remains stable during the traveling and prevents any displacement or shaking. When it is required to move the portable carrier 3000, the user pulls the operating member 410 forward again to release the connecting assembly 3410 from the ISOFIX interface, allowing the portable carrier 3000 to be easily removed. When the portable carrier 3000 is secured to the seat of the transportation vehicle, the first supporting member 310 and the second reinforcing member 3320 provide support for the structure of the portable carrier 3000 and prevent bending or deformation of the portable carrier 3000 due to a load or an external force. The second reinforcing member 3320 is arranged on the front side portion 3140, that is, the side away from the backrest of the seat, and higher mechanical strength thereof ensures impact protection safety of the portable carrier 3000 when the vehicle is traveling, which greatly improve safety of the pet in the portable carrier 3000. At the bottom portion and the front side portion of the portable carrier 3000, the second reinforcing member 3320 further achieves an effect of enhancing strength of the bottom portion of the portable carrier 3000, which helps to maintain the overall shape of the portable carrier 3000, especially when the pet is loaded in the portable carrier 3000.

In some embodiments, the connecting assembly 3410 of the anchoring assembly 3400 and the shoulder belt assembly 3190 extend from a same side of the carrier body 3100, for example, both extend from the rear side portion 3160 of the carrier body 3100, which allows the portable carrier 3000 to be designed to be more coordinated, beautiful, and safer as a whole. When the portable carrier 3000 is placed on the seat of the transportation vehicle, the connecting assembly 3410 is at the unfolded position, and the connecting assembly 3410 extends out from the rear side portion 3160 of the carrier body 3100 to be mounted on the seat. In this case, the shoulder belt assembly 3190 is located between the carrier body 3100 and the backrest of the seat, so that the structure is neater and more beautiful, and the flexible structure of the shoulder belt assembly 3190 and the first reinforcing member 3310 arranged on the rear side portion 3160 jointly provide cushioning and support for the carrier body 3100. When the portable carrier 3000 is carried on the shoulder with the shoulder belt, the connecting assembly 3410 can be folded to the folded position, which does not affect the shoulder carrying and allows the front side window body 3141 arranged on the front side portion 3140 to be always exposed to maintain a good ventilation effect. Therefore, whether the portable carrier 3000 is fixedly placed on the seat of the transportation vehicle or carried by the user on the shoulder, the first reinforcing member 3310 is always located on a side close to the back of the user shoulder carrying it or the backrest of the seat, and provides support. The second reinforcing member 3320 can always be located on a side away from the back of the user shoulder carrying it or the backrest of the seat, thereby providing structural strength for the carrier body 3100 and improving the impact protection effect.

In this aspect, the portable carrier 3000 has good practicality in two use scenarios of shoulder carrying and placement. The operating member provides simple control, so that the fixation and removal of the portable carrier 3000 is easier and faster, making the portable carrier 3000 suitable for use in vehicles. The foldable and unfoldable connecting assembly does not affect the shoulder carrying process and maintains the compact structure of the backpack. The first reinforcing member and the second reinforcing member play a key role in providing structural support, improving comfort, maintaining the shape of the portable carrier 3000, and ensuring stability when fixed. Whether it is carried by the user on the shoulder or fixed in the vehicle, the user can enjoy stable, safe, and comfortable experience.

The technical features in the embodiments in the above aspects may be randomly combined as long as they do not conflict with each other. For concise description, not all possible combinations of the technical features in the above embodiments are described. However, all the combinations of the technical features are to be considered as falling within the scope described in this specification provided that they do not conflict with each other.

The above embodiments only describe several implementations of the present disclosure, and their description is specific and detailed, but cannot therefore be understood as a limitation on the patent scope of the present disclosure. It should be noted that those of ordinary skill in the art may further make variations and improvements without departing from the conception of the present disclosure, and these all fall within the protection scope of the present disclosure. Therefore, the patent protection scope of the present disclosure should be subject to the appended claims.

## Claims

1. A portable carrier, comprising:
a base;
a carrier body arranged on the base, the carrier body having a front side portion and a rear side portion on opposite sides in a longitudinal direction, and the carrier body and the base jointly forming an accommodating space; and
a reinforcing member arranged on at least one of the front side portion and the rear side portion, and connected to the base.

2. The portable carrier according to claim 1, wherein the reinforcing member includes:
a reinforcing portion abutting against the at least one of the front side portion and the rear side portion of the carrier body; and
a connection portion connected to an end portion of the reinforcing portion and extending in a direction perpendicular to the reinforcing portion, the connection portion being connected to the base.

3. The portable carrier according to claim 2, wherein the at least one of the front side portion and the rear side portion of the carrier body has a multi-layer fabric structure, and the reinforcing portion is located in the at least one of the front side portion and the rear side portion.

4. The portable carrier according to claim 1, wherein the carrier body is made of a soft material, and a part of the front side portion that is not abutted against by the reinforcing member forms a clearance region, the clearance region being provided with a breathable mesh.

5. The portable carrier according to claim 1, wherein the carrier body has a left side portion and a right side portion, and
the portable carrier further includes a cushioning body, the cushioning body being detachably arranged on at least one of the left side portion and the right side portion through a connection mechanism.

6. The portable carrier according to claim 5, wherein the connection mechanism includes:
a plurality of first mating parts arranged on the cushioning body; and
a plurality of second mating parts arranged on the at least one of the left side portion and the right side portion; and
wherein the plurality of first mating parts are mated with the plurality of second mating parts to mount the cushioning body on the at least one of the left side portion and the right side portion.

7. The portable carrier according to claim 5, wherein the cushioning body includes:
a first cushioning layer; and
a second cushioning layer stacked with the first cushioning layer; and
wherein the first cushioning layer is more elastic than the second cushioning layer, and the first cushioning layer is farther from the carrier body than the second cushioning layer.

8. The portable carrier according to claim 1, wherein the portable carrier is provided with an anchoring assembly, the anchoring assembly being adapted to be connected to a seat of a transportation vehicle to secure the portable carrier to the seat.

9. The portable carrier according to claim 8, wherein the anchoring assembly includes:
at least one ISOFIX connector, the at least one ISOFIX connector being configured to be connected to at least one connection point of the seat of the transportation vehicle, and the at least one ISOFIX connector being movably connected to the base to be switchable between an unfolded position and a folded position, wherein the base is provided with at least one folding space, and when the at least one ISOFIX connector is at the folded position, the at least one ISOFIX connector is received in the at least one folding space; or
at least one Latch connector and at least one webbing, the at least one Latch connector being connected to at least one of the base and the carrier body through the at least one webbing, and the at least one Latch connector being configured to be connected to the at least one connection point of the seat of the transportation vehicle.

10. The portable carrier according to claim 1, wherein the reinforcing member includes a first reinforcing member and a second reinforcing member, the first reinforcing member and the second reinforcing member being connected to each other;
wherein a portion of the first reinforcing member is arranged on the front side portion, and another portion of the first reinforcing member is connected to the base; and
wherein a portion of the second reinforcing member is arranged on the rear side portion, and another portion of the second reinforcing member is connected to the base.

11. The portable carrier according to claim 10, wherein:
the first reinforcing member includes a first reinforcing portion and a first connection portion extending from the first reinforcing portion;
the second reinforcing member includes a second reinforcing portion and a second connection portion extending from the second reinforcing portion;
the first reinforcing portion and the second reinforcing portion are arranged on the front side portion and the rear side portion respectively; and
the first connection portion and the second connection portion are connected to the base.

12. The portable carrier according to claim 11, wherein:
the first reinforcing member and the second reinforcing member are arranged separately, and the first connection portion and the second connection portion are connected together; or
the first reinforcing member and the second reinforcing member are integrally formed.

13. The portable carrier according to any one of claims 1 to 12, wherein the portable carrier further includes a first support bar, the first support bar being connected to the base, and the first support bar being arranged adjacent to the front side portion or arranged in the front side portion.

14. The portable carrier according to claim 13, wherein:
the carrier body further has a top portion and a left side portion and a right side portion on opposite sides in a transverse direction; and
the first support bar is embedded into respective edges of the top portion, the left side portion, and the right side portion that are adjacent to the front side portion, or the first support bar is embedded into edges of the front side portion adjacent to the top portion, the left side portion, and the right side portion.

15. The portable carrier according to claim 1, further comprising:
a shoulder belt assembly arranged on the carrier body and configured for shoulder carrying.

16. The portable carrier according to claim 15, wherein:
the reinforcing member includes a first reinforcing member arranged on a same side of the carrier body as the shoulder belt assembly, and connected to the base; and/or
the reinforcing member includes a second reinforcing member arranged on a side of the carrier body opposite to the shoulder belt assembly, and connected to the base.

17. The portable carrier according to claim 16, wherein the first reinforcing member includes a support plate, the support plate being arranged on the base to provide support on a side of the carrier body on which the shoulder belt assembly is located.

18. The portable carrier according to claim 16, wherein the second reinforcing member includes:
a reinforcing portion arranged on a side of the carrier body opposite to the shoulder belt assembly; and
a connection portion connected to an end portion of the reinforcing portion and extending in a direction perpendicular to the reinforcing portion, the connection portion being connected to the base.

19. The portable carrier according to any one of claims 16 to 18, wherein the first reinforcing member is arranged on the rear side portion of the carrier body, and the second reinforcing member is arranged on the front side portion of the carrier body.

20. The portable carrier according to any one of claims 15 to 19, further comprising:
an anchoring assembly arranged on the base, and having a folded position for shoulder carrying and an unfolded position for fixed placement;
wherein the anchoring assembly includes a connecting assembly, the connecting assembly and the shoulder belt assembly extending from the same side of the carrier body when the connecting assembly is at the unfolded position.
